# EUROPÄISCHE PATENTSCHRIFT

(11) **EP 1 397 439 B1**
(45) Veröffentlichungstag und Bekanntmachung des Hinweises auf die Patenterteilung: **16.11.2005**
(21) Anmeldenummer: 02754592.0
(22) Anmeldetag: 28.05.2002
(51) Int. Cl.: C09B 67/22, D06P 1/38

(54) **FARBSTOFFMISCHUNGEN VON FASERREAKTIVEN AZOFARBSTOFFEN UND IHRE VERWENDUNG**
DYE MIXTURES OF FIBER-REACTIVE AZODYES AND USE THEREOF
MELANGES DE COLORANTS AZOIQUES REAGISSANT AVEC LES FIBRES ET UTILISATION

(30) Priorität: 02.06.2001 DE 10127061
(43) Veröffentlichungstag der Anmeldung: 17.03.2004
(73) Patentinhaber: DyStar Textilfarben GmbH & Co. Deutschland KG, 65926 Frankfurt am Main (DE)
(72) Erfinder: EICHHORN, Joachim, 65929 Frankfurt am Main (DE)
(86) Internationale Anmeldenummer: PCT/EP2002/005824
(87) Internationale Veröffentlichungsnummer: WO 2002/098986

(56) Entgegenhaltungen:
- EP-A- 0 976 792
- EP-A- 0 982 374
- EP-A- 1 046 677
- EP-A- 1 046 679
- EP-A- 1 048 695

## Beschreibung

Die Erfindung liegt auf dem technischen Gebiet der faserreaktiven Azofarbstoffe.

Farbstoffmischung faserreaktiver Azofarbstoffe und deren Verwendung zum Färben von Hydroxy- und Carbonamidgruppen-haltigen Material in schwarzen Farbtönen sind beispielsweise aus den Dokumenten US 5,445,654, US 5,611,821, KR 94-2560, Sho 58-160362 und EP-A-0 870 807 bekannt. Diese besitzen jedoch gewisse anwendungstechnische Mängel, wie beispielsweise eine zu große Abhängigkeit der Farbausbeute von wechselnden Färbeparametern im Färbeprozeß, oder einen ungenügenden oder unegalen Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern), oder eine zu große Salzabhängigkeit der Färbungen. Folge dieser Mängel können schlechte Reproduzierbarkeiten der erhältlichen Färbungen sein. Aus den Dokumenten WO 98/42784, WO 98/42785, WO 93/18224 und US 5,330,539 sind Farbstoffe beziehungsweise Farbstoffmsichungen bekannt, die in Gegenwart geringer Salzmengen gefärbt werden können, jedoch in Abwesenheit von Salz nur sehr farbschwache Färbungen liefern.

Die Druckschriften EP,A, 1,046,679; EP,A, 982,374; EP,A,1,048,695 sowie EP,A, 976,792 offenbaren Reaktivfarbstoffmischungen ähnlicher Zusammensetzung.

Da es aus ökologischen und ökonomischen Gründen erforderlich ist die Salzfracht der Färbereiabwasser zu reduzieren, besteht ein Bedarf an Reaktivfarbstoffen, die in Gegenwart geringer Salzmengen oder sogar in Abwesenheit von Elektrolytsalzen, Färbungen mit hoher Farbstärke liefern.

Mit der vorliegenden Erfindung wurden nunmehr Farbstoffmischungen gefunden, die Färbungen mit hohen Farbstärken in Gegenwart von nur sehr geringen Mengen an, oder sogar in Abwesenheit von Elektrolytsalzen liefern.

Die Erfindung betrifft somit Farbstoffmischungen, die einen oder mehrere, wie zwei oder drei, bevorzugt 1 oder 2, Farbstoffe der nachstehend angegebenen und definierten allgemeinen Formel (I), 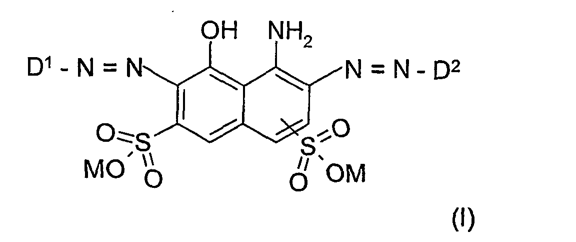 und einen oder mehrere, wie zwei oder drei, bevorzugt 1 oder 2, Farbstoffe der nachstehend angegebenen und definierten allgemeinen Formel (II) enthalten 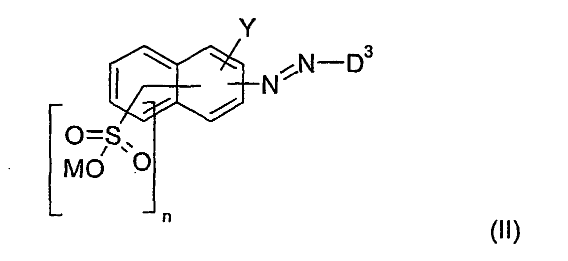 in welchen bedeuten:
D¹ und D² sind eine Gruppe der allgemeinen Formel (1) 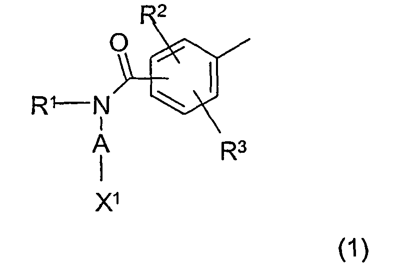 worin
- R¹: Wasserstoff, (C₁-C₄)-Alkyl, Aryl oder ein substituierter Arylrest ist;
- R² und R³: unabhängig voneinander Wasserstoff, (C₁-C₄)-Alkyl, (C₁-C₄)-Alkoxy, Hydroxy, Sulfo, Carboxy, Amido oder Halogen sind; und
- A: eine Phenylengruppe der allgemeinen Formel (2) ist 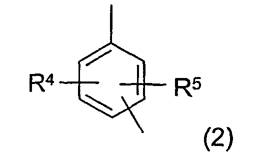 worin
R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; oder eine Naphthylengruppe der allgemeinen Formel (3) 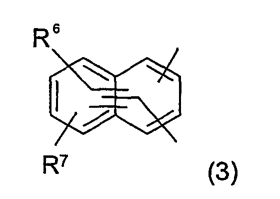 worin
R⁶ und R⁷ unabhängig voneinander Wasserstoff, (C₁-C₄)-Alkyl, (C₁-C₄)-Alkoxy, Hydroxy, Sulfo, Carboxy, Amido oder Halogen bedeuten; oder eine Polymethylengruppe der allgemeinen Formel (4)

-(CR⁸R⁹)ₖ- (4)

worin
k eine ganze Zahl größer 1 ist und
R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und

- X¹: für Wasserstoff oder eine Gruppe der Formel -SO₂-Z steht; oder
für eine Phenylgruppe der allgemeinen Formel (5) stehen 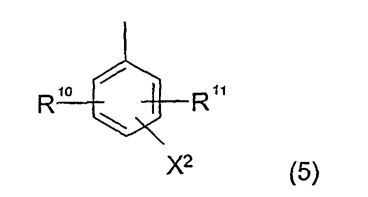 worin
- R¹⁰ und R¹¹: unabhängig voneinander Wasserstoff, (C₁-C₄)-Alkyl, (C₁-C₄)-Alkoxy, Hydroxy, Sulfo, Carboxy, Amido oder Halogen sind; und
- X²: eine der Bedeutungen von X¹ hat;
oder eine Naphthylgruppe der allgemeinen Formel (6) bedeuten 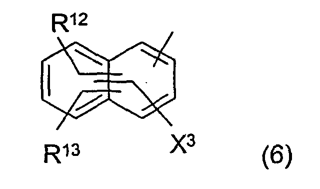 worin
- R¹² und R¹³: unabhängig voneinander Wasserstoff, (C₁-C₄)-Alkyl, (C₁-C₄)-Alkoxy, Hydroxy, Sulfo, Carboxy, Amido oder Halogen sind; und
- X³: eine der Bedeutungen von X¹ hat;

- Z: -CH=CH₂, -CH₂CH₂Z¹ oder Hydroxy bedeutet, worin
Z¹ Hydroxy oder eine unter Alkaliwirkung abspaltbare Gruppe ist; und
- M: Wasserstoff, ein Alkalimetall oder ein Äquivalent eines Erdalkalimetalls bedeutet;
- D³: besitzt eine der Bedeutungen von D¹ oder D² oder steht für eine Gruppe der allgemeinen Formel (7) 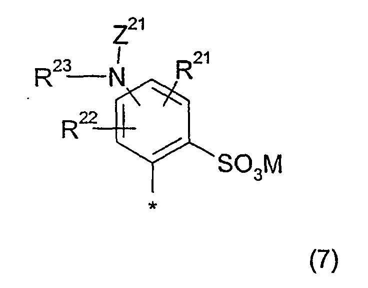 worin
R²¹ und R²² unabhängig voneinander eine der Bedeutungen von R² und R³ haben;
R²³ ist Wasserstoff, (C₁- C₄)-Alkyl, unsubstituiertes oder durch (C₁-C₄)-Alkyl, (C₁-C₄)-Alkoxy, Sulfo, Halogen oder Carboxy substituiertes Phenyl; und
Z²¹ ist eine faserreaktive Gruppe der allgemeinen Formel (8) oder (9) oder (10) 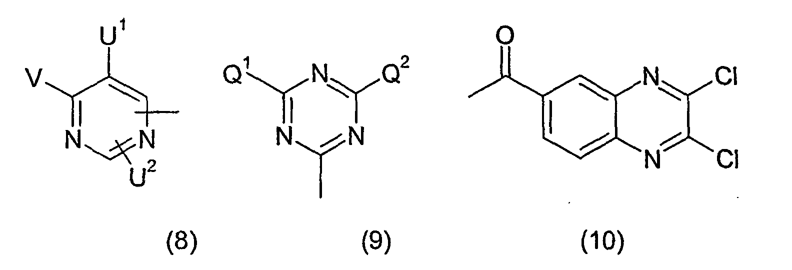 worin
V Fluor oder Chlor bedeutet;
U¹, U² unabhängig voneinander Fluor, Chlor oder Wasserstoff sind; und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (11) oder (12) bedeuten 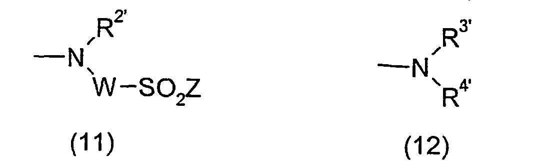 worin
R^{2'} Wasserstoff oder (C₁-C₆)-Alkyl , Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R^{3'} und R^{4'} haben unabhängig voneinander eine der Bedeutungen von R^{2'}, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfo, -NR^{5'}- mit R^{5'} gleich (C₁-C₆)-Alkyl ist, oder stehen für eine Gruppe der allgemeinen Formel (13) 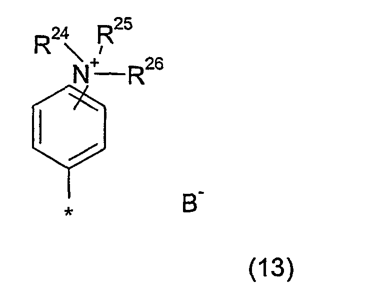 worin
R²⁴, R²⁵ und R²⁶ (C₁-C₄)-Alkyl oder (C₁-C₄)-Hydroxyalkyl sind; und
B- das Äquivalent eines Anions, wie Hydrogensulfat, Sulfat, Fluorid, Chlorid, Bromid, Dihydrogenphosphat, Hydrogenphosphat, Phosphat, Hydroxid oder Acetat ist;
W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfo, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
Z die obengenannte Bedeutung hat;
- n: ist 1 oder 2; und
- Y: steht für Hydroxy oder Amino, das unsubstituiert oder durch (C₁-C₄)-Alkyl oder Aryl substituiert ist;
wobei mindestens einer der Reste D¹ und D² für eine Gruppe der allgemeinen Formel (1) steht,
wobei im Falle, daß A für eine Gruppe der allgemeinen Formel (4) steht, R¹ für Aryl oder substituiertes Aryl steht; und
wobei der Reaktivfarbstoff der allgemeinen Formel (I) mindestens eine -SO₂-Z - Gruppe enthält..

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Für Substituenten R stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl. Analoges gilt für (C₁-C₄)-Alkoxygruppen.

Für Substituenten R stehende Arylgruppen sind insbesondere die Phenylgruppe. Eine für R¹ stehende substituierte Arylgruppe ist insbesondere eine mit ein, zwei oder drei voneinander unabhängigen Gruppen aus der Reihe (C₁-C₄)-Alkyl, (C₁-C₄)-Alkoxy, Hydroxy, Sulfo, Carboxy, Amido oder Halogen substituierte Phenylgruppe. Für Substituenten R stehendes Halogen ist insbesondere Fluor, Chlor und Brom, wobei Fluor und Chlor bevorzugt sind.

Alkalisch eliminierbare Substituenten Z¹, die in β-Stellung der Ethylgruppe von Z stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino.

Z ist bevorzugt Vinyl, β-Chlorethyl und insbesondere bevorzugt β-Sulfatoethyl.

Die Gruppen "Sulfo", "Carboxy", "Thiosulfato", "Phosphato", und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, jeweils mit M der obengenannten Bedeutung.

Die Farbstoffe der allgemeinen Formel (I) und (II) können innerhalb der Bedeutung von Z unterschiedliche faserreaktive Gruppen -S02Z besitzen. Insbesondere können die faserreaktiven Gruppen -SO2Z zum einen Vinylsulfonylgruppen und zum anderen Gruppen -CH2CH2Z1, bevorzugt β-Sulfatoethylsulfonyl-Gruppen, bedeuten. Enthalten die Farbstoffe der allgemeinen Formel (I) und (II) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

k bedeutet bevorzugt die Zahl 2 oder 3.

Die Reste R¹ bis R¹³ sind bevorzugt Wasserstoff, R⁶, R⁷, R¹² und R¹³ sind außerdem bevorzugt Sulfo.

Im Falle, daß A für Phenylen und X¹ für -SO₂Z stehen, steht die SO₂Z-Gruppe bevorzugt in meta- oder para-Stellung zum Stickstoffatom. In der Gruppe der allgemeinen Formel (1) steht die Carbonamid-Gruppe bevorzugt in para- oder meta-Position zur Diazogruppe. Im Falle, daß A für Naphthylen steht, steht die Bindung, die zum Stickstoffatom führt, bevorzugt in β-Stellung an den Naphthalinkern gebunden. Im Falle, daß D¹ oder D² für eine Gruppe der allgemeinen Formel (6) steht, steht die Bindung, die zur Diazogruppe führt bevorzugt in β-Stellung an den Naphthalinkern gebunden.
Im Falle, daß D¹ oder D² für eine Gruppe der allgemeinen Formel (5) und X² für -SO₂Z stehen, steht die SO₂Z-Gruppe bevorzugt in meta- oder para-Stellung zur Diazogruppe.

Beispiele für für A stehende Substituenten sind insbesondere 1,2-Phenylen, 1,3-Phenylen, 1,4-Phenylen, 2-Chlor-1,4-phenylen, 2-Chlor-1,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-1,4-phenylen, 2-Methyl-1,4-phenylen, 2,6-Naphthylen, 2,8-Naphthylen, 1-Sulfo-2,6-naphthylen, 6-Sulfo-2,8-naphthylen oder 1,2-Ethylen und 1,3-Propylen.

Besonders bevorzugt steht A für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen oder 1,2-Ethylen und 1,3-Propylen, wobei im Falle der beiden zuletzt genannten Alkylengruppen der Rest R¹ bevorzugt Phenyl und 2-Sulfophenyl bedeutet.

Für D¹ oder D² stehende Gruppen der allgemeinen Formel (5) und (6) sind beispielsweise 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-4-(β-sulfatoethylsulfonyl)-phenyl, 2-Chlor-5-(β-sulfatoethylsulfonyl)-phenyl, 2-Brom-4-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Methoxy-5-(β-sulfatoethylsulfonyl)-phenyl, 2-Ethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2- oder 3- oder 4-Vinylsulfonyl-phenyl, 2-Sulfo-4-vinylsulfonyl-phenyl, 2-Chlor-4-(β-chlorethylsulfonyl)-phenyl, 2-Chlor-5-(β-chlorethylsulfonyl)-phenyl, 3- oder 4-(β-Acetoxyethyfsulfonyl)-phenyl, 6- oder 8-(β-Sulfatoethylsulfonyl)-naphth-2-yl, 6-(β-Sulfatoethylsulfonyl)-1-sulfo-naphth-2-yl und 8-(β-Sulfatoethylsulfonyl)-6-sulfonaphth-2-yl, bevorzugt hiervon sind 3-(β-Sulfatoethylsulfonyl)-phenyl, 4-(β-Sulfatoethylsulfonyl)-phenyl, 2 -Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl und 3- oder 4-Vinylsulfonylphenyl.

In der allgemeinen Formel (II) ist Y bevorzugt Hydroxy oder Amino.

D³ ist bevorzugt 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 6-(β-Sulfatoethylsulfonyl)-1-sulfonaphth-2-yl, 3- or 4-Vinylsulfonyl-phenyl, 1-Sulfo-4-(2,4-difluor-pyrimidin-6-yl)-amino-2-phenyl oder 1-Sulfo-4-(4,6-difluor-pyrimidin-2-yl)-amino-2-phenyl, oder eine Gruppe der allgemeinen Formel (1), wobei A, R¹ bis R³ und X¹ die oben beschriebenen bevorzugten Bedeutungen besitzen.

In der allgemeinen Formel (7) sind R²¹ bis R²³ bevorzugt Wasserstoff und R²¹ und R²² sind außerdem bevorzugt Sulfo.

In den allgemeinen Formeln (11) und (12) sind die Reste R^{2'} bis R^{4'} bevorzugt Wasserstoff oder Methyl, R^{2'} ist bevorzugt auch Phenyl und R^{3'}, R^{4'} sind bevorzugt 2-Sulfoethyl, 2-, 3- oder 4-Sulfophenyl, 3- oder 4-Trimethylammoniumphenyl-sulfat, 3- oder 4-Trimethylammoniumphenyl-chlorid, oder R^{3'} und R^{4'} bilden ein cyclisches Ringsystem, das bevorzugt der Formel -(CH₂)₂-O-(CH₂)₂- entspricht.

W ist bevorzugt 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen, 1,2-Ethylen, 1,3-Propylen.

Q¹, Q² sind unabhängig voneinander bevorzugt Fluor, Chlor, Carboxypyridino, Carbamoylpyridino oder eine Gruppe der allgemeinen Formel (11) oder (12), worin R^{2'} bis R^{4'}, W und Z die oben genannten bevorzugten Bedeutungen haben.

In der allgemeinen Formel (13) sind die Reste R²⁴ bis R²⁶ bevorzugt Methyl oder Ethyl.
Anion B⁻ ist bevorzugt Sulfat oder Chlorid.
In der allgemeinen Formel (13) steht die quarternäre Ammoniumgruppe bevorzugt in meta- oder para-Stellung zur freien Bindung am Benzolkern.

Beispiele für die Gruppe Z²¹ sind 2,4-Dichlor-1,3,5-triazin-6-yl, 2-Chlor-4-hydroxy-1,3,5-triazin-6-yl, 2-Chlor-4-methoxy-1,3,5-triazin-6-yl, 2-Chlor-4-phenoxy-1,3,5-triazin-6-yl-, 2-Chlor-4-(4-sulfophenoxy)-1,3,5-triazin-6-yl, 2-Chlor-4-methylmercapto-1,3,5-triazin-6-yl, 4-Amino-2-chlor-1,3,5-triazin-6-yl, 2-Chlor-4-methylamino-1,3,5-triazin-6-yl, 2-Chlor-4-morpholino-1,3,5-triazin-6-yl, 2-Chlor-4-phenylamino-1,3,5-triazin-6-yl, 2-Chlor-4-methylphenylamino-1 ,3,5-triazin-6-yl, 2-Chlor-4-(2-sulfophenylamino)-1 ,3,5-triazin-6-yl, 2-Chlor-4-(3-sulfophenylamino)-1,3,5-triazin-6-yl, 2-Chlor-4-(4-sulfophenylamino)-1,3,5-triazin-6-yl, 2-Chlor-4-(2,5-disulfophenylamino)-1,3,5-triazin-6-yl, 2-Chlor-4-(3-trimethylammoniumphenylamino)-1,3,5-triazin-6-yl, 2-Chlor-4-(4-trimethylammoniumphenylamino)-1,3,5-triazin-6-yl, 2-Chlor-4-cyanamido-1,3,5-triazin-6-yl, 2-Chlor-4-(2-sulfoethylamino)-1,3,5-triazin-6-yl, 2-Chlor-4-(2-sulfoethyl-methylamino)-1,3,5-triazin-6-yl, 2-Chlor-4-(3-carboxypyridino)-1,3,5-triazin-6-yl, 2-Chlor-4-(4-carboxypyridino)-1,3,5-triazin-6-yl, 2-Chlor-4-(3-carbamoylpyridino)-1,3,5-triazin-6-yl, 2-Chlor-4-(4-carbamoylpyridino)-1,3,5-triazin-6-yl, 2-Chlor-4-(2-(2-sulfatoethylsulfonyl)-phenylamino)-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(N-ethyl-4-(2-sulfatoethylsulfonyl)-phenylamino)-1,3,5-triazin-6-yl, 2-Chlor-4-(2-carboxy-5-(2-sulfatoethylsulfonyl)-phenylamino)-1,3,5-triazin-6-yl, 2-Chlor-4-(2-chlor-4-(2-sulfatoethylsulfonyl)-phenylamino)-1,3,5-triazin-6-yl, 2-Chlor-4-(2-chlor-5-(2-sulfatoethylsulfonyl)-phenylamino)-1,3,5-triazin-6-yl, 2-Chlor-4-(2-brom-4-(2-sulfatoethylsulfonyl)-phenylamino)-1,3,5-triazin-6-yl, 2-Chlor-4-(2-sulfo-4-(2-sulfatoethylsulfonyl)-phenylamino)-1,3,5-triazin-6-yl, 2-Chlor-4-(2-sulfo-5-(2-sulfatoethylsulfonyl)-phenylamino)-1,3,5-triazin-6-yl, 2-Chlor-4-(2-methoxy-5-(2-sulfatoethylsulfonyl)-phenylamino)-1,3,5-triazin-6-yl, 2-Chlor-4-(2,5-dimethoxy-4-(2-sulfatoethylsulfonyl)-phenylamino)-1,3,5-triazin-6-yl, 2-Chlor-4-(2-methoxy-5-methyl-4-(2-sulfatoethylsulfonyl)-phenylamino)-1,3,5-triazin-6-yl, 2-Chlor-4-(2-methyl-4-(2-sulfatoethylsulfonyl)-phenylamino)-1,3,5-triazin-6-yl, 2-Chlor-4-(2-(vinylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1,3,5-triazin-6-yl, 2-Chlor-4-(N-ethyl-4-(vinylsulfonyl)-phenylamino)-1,3,5-triazin-6-yl, 2-Chlor-4-(6-(2-sulfatoethylsulfonyl)-naphth-2-ylamino)-1,3,5-triazin-6-yl, 2-Chlor-4-(8-(2-sulfatoethylsulfonyl)-naphth-2-ylamino)-1,3,5-triazin-6-yl, 2-Chlor-4-(8-(2-sulfatoethylsulfonyl)-6-sulfo-naphth-2-ylamino)-1,3,5-triazin-6-yl, 2-Chlor-4-(3-(2-(2-sulfatoethylsulfonyl)-ethylcarbamoyl)-phenylamino)-1,3,5-triazin-6-yl, 2-Chlor-4-(3-(2-(vinylsulfonyl)-ethylcarbamoyl)-phenylamino)-1,3,5-triazin-6-yl, 2-Chlor-4-(4-(N-methyl-2-(2-sulfatoethylsulfonyl)-ethylcarbamoyl)-phenylamino)-1,3,5-triazin-6-yl, 2-Chlor-4-(4-(N-phenyl-2-(2-sulfatoethylsulfonyl)-ethylcarbamoyl)-phenylamino)-1,3,5-triazin-6-yl, 2-Chlor-4-(4-(3-(2-sulfatoethylsulfonyl)-phenylcarbamoyl)-phenylamino)-1,3,5-triazin-6-yl, 2-Chlor-4-(4-(4-(2-sulfatoethylsulfonyl)-phenylcarbamoyl)-phenylamino)-1,3,5-triazin-6-yl, 2-Chlor-4-(3-(3-(2-sulfatoethylsulfonyl)-phenylcarbamoyl)-phenylamino)-1,3,5-triazin-6-yl, 2-Chlor-4-(3-(4-(2-sulfatoethylsulfonyl)-phenylcarbamoyl)-phenylamino)-1,3,5-triazin-6-yl, 2-Chlor-4-(3-(2-sulfatoethylsulfonyl)-propylamino)-1,3,5-triazin-6-yl, 2-Chlor-4-(N-methyl-N-(2-(2-sulfatoethylsulfonyl)-ethyl)-amino)-1,3,5-triazin-6-yl, 2-Chlor-4-(N-phenyl-N-(2-(2-sulfatoethylsulfonyl)-ethyl)-amino)-1,3,5-triazin-6-yl, 2-Fluor-4-hydroxy-1,3,5-triazin-6-yl, 2-Fluor-4-methoxy-1,3,5-triazin-6-yl, 2-Fluor-4-phenoxy-1,3,5-triazin-6-yl, 2-Fluor-4-(4-sulfophenoxy)-1,3,5-triazin-6-yl, 2-Fluor-4-morpholino-1,3,5-triazin-6-yl, 2-Fluor-4-phenylamino-1,3,5-triazin-6-yl, 2-Fluor-4-methylphenylamino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(2,5-disulfophenylamino)-1,3,5-triazin-6-yl, 2-Fluor-4-(3-trimethylammoniumphenylamino)-1,3,5-triazin-6-yl, 2-Fluor-4-(4-trimethylammoniumphenylamino)-1,3,5-triazin-6-yl, 2-Fluor-4-(2-(2-sulfatoethylsulfonyl)-phenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(N-ethyl-4-(2-sulfatoethylsulfonyl)-phenylamino)-1,3,5-triazin-6-yl, 2-Fluor-4-(2-carboxy-5-(2-sulfatoethylsulfonyl)-phenylamino)-1,3,5-triazin-6-yl, 2-Fluor-4-(2-chlor-4-(2-sulfatoethylsulfonyl)-phenylamino)-1,3,5-triazin-6-yl, 2-Fluor-4-(2-chlor-5-(2-sulfatoethylsulfonyl)-phenylamino)-1,3,5-triazin-6-yl, 2-Fluor-4-(2-brom-4-(2-sulfatoethylsulfonyl)-phenylamino)-1,3,5-triazin-6-yl, 2-Fluor-4-(2-sulfo-4-(2- sulfatoethylsulfonyl)-phenylamino)-1,3,5-triazin-6-yl, 2-Fluor-4-(2-sulfo-5-(2-sulfatoethylsulfonyl)-phenylamino)-1,3,5-triazin-6-yl, 2-Fluor-4-(2-methoxy-5-(2-sulfatoethylsulfonyl)-phenylamino)-1,3,5-triazin-6-yl, 2-Fluor-4-(2,5-dimethoxy-4-(2-sulfatoethylsulfonyl)-phenylamino)-1,3,5-triazin-6-yl, 2-Fluor-4-(2-methoxy-5-methyl-4-(2-sulfatoethylsulfonyl)-phenylamino)-1,3,5-triazin-6-yl, 2-Fluor-4-(2-methyl-4-(2-sulfatoethylsulfonyl)-phenylamino)-1,3,5-triazin-6-yl, 2-Fluor-4-(2-(vinylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(N-ethyl-4-(vinylsulfonyl)-phenylamino)-1,3,5-triazin-6-yl, 2-Fluor-4-(3-(2-(2-sulfatoethylsulfonyl)-ethylcarbamoyl)-phenylamino)-1,3,5-triazin-6-yl, 2-Fluor-4-(3-(2-(vinylsulfonyl)-ethylcarbamoyl)-phenylamino)-1,3,5-triazin-6-yl, 2-Fluor-4-(4-(N-methyl-2-(2-sulfatoethylsulfonyl)-ethylcarbamoyl)-phenylamino)-1,3,5-triazin-6-yl, 2-Fluor-4-(4-(N-phenyl-2-(2-sulfatoethylsulfonyl)-ethylcarbamoyl)-phenylamino)-1,3,5-triazin-6-yl, 2-Fluor-4-(4-(3-(2-sulfatoethylsulfonyl)-phenylcarbamoyl)-phenylamino)-1,3,5-triazin-6-yl, 2-Fluor-4-(4-(4-(2-sulfatoethylsulfonyl)-phenylcarbamoyl)-phenylamino)-1,3,5-triazin-6-yl, 2-Fluor-4-(3-(3-(2-sulfatoethylsulfonyl)-phenylcarbamoyl)-phenylamino)-1,3,5-triazin-6-yl, 2-Fluor-4-(3-(4-(2-sulfatoethylsulfonyl)-phenylcarbamoyl)-phenylamino)-1,3,5-triazin-6-yl, 2-Fluor-4-(3-(2-sulfatoethylsulfonyl)-propylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyl)-ethyl)-amino)-1,3,5-triazin-6-yl, 2,4-Di(4-(2-sulfatoethylsulfonyl)-phenylamino)-1,3,5-triazin-6-yl, 2,4-Di(3-(2-sulfatoethylsulfonyl)-phenylamino)-1,3,5-triazin-6-yl, 2-(3-(2-Sulfatoethylsulfonyl)-phenylamino)-4-(4-(2-sulfatoethylsulfonyl)-phenylamino)-1,3,5-triazin-6-yl, 2-(N-Ethyl-4-(2-sulfatoethylsulfonyl)-phenylamino)-4-(4-(2-sulfatoethylsulfonyl)-phenylamino)-1,3,5-triazin-6-yl, 2-(N-Ethyl-4-(2-sulfatoethylsulfonyl)-phenylamino)-4-(3-(2-sulfatoethylsulfonyl)-phenylamino)-1,3,5-triazin-6-yl, 2-(N-Ethyl-3-(2-sulfatoethylsulfonyl)-phenylamino)-4-(4-(2-sulfatoethylsulfonyl)-phenylamino)-1,3,5-triazin-6-yl, 2-(N-Ethyl-3-(2-sulfatoethylsulfonyl)-phenylamino)-4-(3-(2-sulfatoethylsulfonyl)-phenylamino)-1,3,5-triazin-6-yl, 2,4-Di(N-ethyl-4-(2-sulfatoethylsuifonyl)-phenylamino)-1,3,5-triazin-6-yl, 2,4-Di(3-(vinylsulfonyl)-phenylamino)-1,3,5-triazin-6-yl, 2,4-Di(4-(vinylsulfonyl)-phenylamino)-1,3,5-triazin-6-yl, 2-(3-Carboxypyridino)-4-morpholino-1,3,5-triazin-6-yl, 2-(4-Carboxypyridino)-4-(3-sulfophenylamino)-1,3,5-triazin-6-yl, 2-(3-Carbamoylpyridino)-4-(2-sulfophenylamino)-1,3,5-triazin-6-yl, 2-(4-Carbamoylpyridino)-4-(4-(2-sulfatoethylsulfonyl)-phenylamino)-1,3,5-triazin-6-yl, 2,4-Difluor-pyrimidin-6-yl, 4,6-Difluor-pyrimidin-2-yl, 5-Chlor-2,4-difluor-pyrimidin-6-yl, 5-Chlor-4,6-difluorpyrimidin-2-yl, 4,5-Difluor-pyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl, 4-Chlor-pyrimidin-6-yl, 2,3-Dichlorochinoxalin-6-carbonyl.

Bevorzugt bedeutet Z²¹ 2,4-Dichlor-1,3,5-triazin-6-y1, 2-Chlor-4-(3-carboxypyridino)-1,3,5-triazin-6-yl, 2-Chlor-4-(4-carboxypyridino)-1,3,5-triazin-6-yl, 2-Chlor-4-(3-carbamoylpyridino)-1,3,5-triazin-6-yl, 2-Chlor 4-(4-carbamoylpyridino)-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1,3,5-triazin-6-yl, 2-Chlor-4-(4-(3-(2-sulfatoethylsulfonyl)-phenylcarbamoyl)-phenylamino)-1,3,5-triazin-6-yl, 2-Chlor-4-(4-(4-(2-sulfatoethylsulfonyl)-phenylcarbamoyl)-phenylamino)-1,3,5-triazin-6-yl, 2-Chlor-4-(3-(3-(2-sulfatoethylsulfonyl)-phenylcarbamoyl)-phenylamino)-1,3,5-triazin-6-yl, 2-Chlor-4-(3-(4-(2-sulfatoethylsulfonyl)-phenylcarbamoyl)-phenylamino)-1,3,5-triazin-6-yl, 2-Chlor-4-(N-methyl-N-(2-(2-sulfatoethylsulfonyl)-ethyl)-amino)-1,3,5-triazin-6-yl, 2-Chlor-4-(N-phenyl-N-(2-(2-sulfatoethylsulfonyl)-ethyl)-amino)-1,3,5-triazin-6-yl, 2-Fluor 4-morpholino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(3-trimethylammoniumphenylamino)-1,3,5-triazin-6-yl, 2-Fluor-4-(4-trimethylammoniumphenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(4-(3-(2-sulfatoethylsulfonyl)-phenylcarbamoyl)-phenylamino)-1,3,5-triazin-6-yl, 2-Fluor 4-(4-(4-(2-sulfatoethylsulfonyl)-phenylcarbamoyl)-phenylamino)-1,3,5-triazin-6-yl, 2-Fluor-4-(3-(3-(2-sulfatoethylsulfonyl)-phenylcarbamoyl)-phenylamino)-1,3,5-triazin-6-yl, 2-Fluor-4-(3-(4-(2-sulfatoethylsulfonyl)-phenylcarbamoyl)-phenylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyl)-ethyl)-amino)-1,3,5-triazin-6-yl, 2,4-Difluorpyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 2,3-Dichlorochinoxalin-6-carbonyl.

Besonders bevorzugt steht Z²¹ für 2,4-Dichlor-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1 ,3 ,5-triazin-6-yl, 2-Chlor-4-(3-(vinylsulfonyl)-phenylamino)-1,3,5-triazin-6-yl, 2-Chlor 4-(4-(vinylsulfonyl)-phenylamino)-1,3,5-triazin-6-yl, 2-Chlor-4-(N-methyl-N-(2-(2-sulfatoethylsulfonyl)-ethyl)-amino)-1,3,5-triazin-6-yl, 2-Chlor-4-(N-phenyl-N-(2-(2-sulfatoethylsulfonyl)-ethyl)-amino)-1,3,5-triazin-6-yl, 2-Fluor-4-morpholino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(3-trimethylammoniumphenylamino)-1,3,5-triazin-6-yl, 2-Fluor-4-(4- trimethylammoniumphenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyl)-ethyl)-amino)-1,3,5-triazin-6-yl, 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 2,3-Dichlorochinoxalin-6-carbonyl.

In der allgemeinen Formel (II) steht im Falle, daß D³ für eine Gruppe der allgemeinen Formel (6) steht, die Bindung, die zur Diazogruppe führt bevorzugt in β-Stellung an den Naphthalinkern gebunden.
Im Falle, daß D³ für eine Gruppe der allgemeinen Formel (5) und X² für -SO₂Z stehen, steht die SO₂Z-Gruppe bevorzugt in meta- oder para-Stellung zur Diazogruppe.

Bevorzugte Mischungen enthalten einen oder mehrere Farbstoffe der allgemeinen Formel (la) 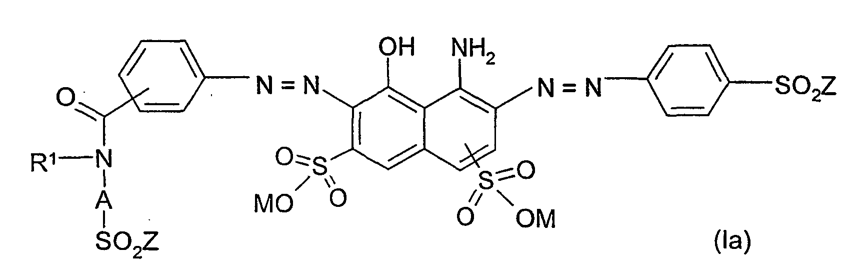 und einen oder mehrere Farbstoffe der allgemeinen Formel (IIa)

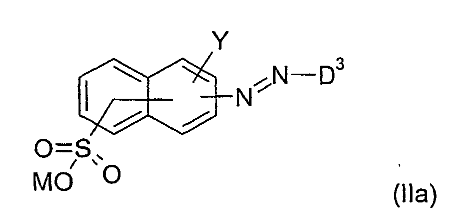

In den allgemeinen Formeln (la) und (IIa) haben M, A, R¹, Z, D³ und Y die obengenannten Bedeutungen.

In der allgemeinen Formel (Ia) sind besonders bevorzugt A Phenylen und Z Vinyl oder β-Sulfatoethyl.
In der allgemeinen Formel (la) sind ganz besonders bevorzugt A Phenylen, R¹ Wasserstoff und Z Vinyl oder β-Sulfatoethyl.

Die erfindungsgemäßen Farbstoffmischungen enthalten Bisazofarbstoffe der allgemeinen Formel (I) in einer Menge von 30 bis 95 Gew-%, bevorzugt 50 bis 90 Gew-% und Monoazofarbstoffe der allgemeinen Formel (II) in einer Menge von 5 bis 70 Gew-%, bevorzugt 10 bis 50 Gew-%.

Optional können die erfindungsgemäßen Farbstoffmischungen außerdem einen oder mehrere Monoazofarbstoffe der allgemeinen Formeln (14) oder (15) in einer Menge bis zu 10 Gew % enthalten, 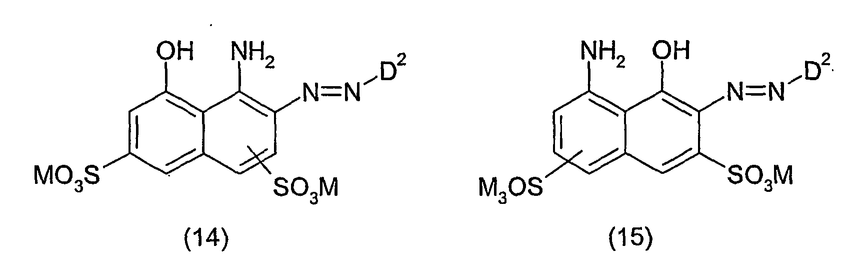 worin M und D2 die obengenannten Bedeutungen haben. Besonders bevorzugt ist D2 4-(2-Sulfatoethylsulfonyl)-phenyl oder 4-Vinylsulfonyl-phenyl.

Farbstoffe der allgemeinen Formel (I) sind aus der EP-A-1 046 677 bekannt, die Farbstoffe der allgemeinen Formel (II) sind aus der DE-A-19 11 427 sowie aus der Literatur bekannt oder können über Standardsynthesemethoden hergestellt werden.
Farbstoffe der allgemeinen Formeln (14) und (15) sind ebenfalls über Standardsynthesemethoden zugänglich oder werden teilweise während der Synthese von Farbstoffen der allgemeinen Formel (I) gebildet. Sie werden üblicherweise als Nuancierkomponenten eingesetzt.

Die erfindungsgemäßen Farbstoffmischungen können als Präparation in fester oder in flüssiger (gelöster) Form vorliegen. In fester Form enthalten sie so weit erforderlich die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die enthaltene Präparation, enthalten. Die Puffersubstanzen liegen in der Regel in einer Gesamtmenge von bis zu 10 Gew.-%, bezogen auf die Präparation, vor.

Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können oder durch dem Fachmann geläufige Diazotierung und Kupplung geeigneter Mischungen von Diazo- und Kupplungskomponenten in den gewünschten Mengenverhältnissen. Beispielsweise kann man ein Amin der allgemeinen Formel (16),

D¹ - NH₂ (16)

für den Fall dass D¹ und D³ gemäß den allgemeinen Formeln (I) und (II) gleiche Bedeutung besitzen und D¹ wie oben angegeben definiert ist, in üblicher Weise diazotieren und die erhaltene Diazoniumverbindung anschließend bei einem pH-Wert zwischen 4 und 8 mit einer wässrigen Lösung oder Suspension eines Monoazofarbstoffs gemäß der allgemeinen Formel (14) und einer Verbindung der allgemeinen Formel (17) 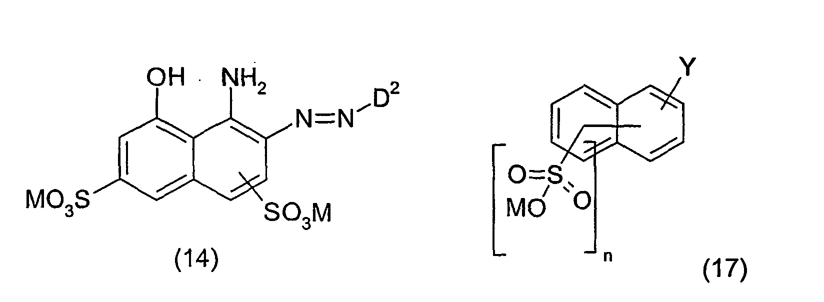 worin M, Y, n und D² wie oben definiert sind, umsetzen.

Die erfindungsgemäße Farbstoffmischung wird in an und für sich bekannter Weise durch Aussalzen beispielsweise mit Kochsalz oder Kaliumchlorid oder durch Sprühtrocknung isoliert.

Farbstoffmischungen die neben β-Chloroethylsulfonyl oder β-Thiosulfatoethylsulfonyl oder β-Sulfatoethylsulfonyl-Gruppen auch Vinylsulfonylgruppen als reaktive Reste haben, können nicht nur ausgehend von entsprechend substituierten Vinylsulfonyl-Anilinen oder -Naphthylaminen synthetisiert werden, sondern auch durch Umsetzung einer Farbstoffmischung, worin Z für β-Chloroethyl, β-Thiosulfatoethyl, oder β-Sulfatoethyl steht, mit einer für den gewünschten Anteil erforderlichen Menge an Alkali und Überführung der genannten β-substituierten Ethylsulfonylgruppen in Vinylsulfonylgruppen erhalten werden. Diese Überführung erfolgt in einer dem Fachmann geläufigen Art und Weise.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet.

Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie beispielsweise in den WO 96/37641 und WO 96/37642 sowie in EP-A-0 538 785 und EP-A-0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, bspw. im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, bspw. mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie bspw. Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine hervorragende Farbstärke in Gegenwart keiner oder nur sehr geringer Alkali- oder Erdalkaliverbindungen aus. So benötigt man beispielsweise für eine geringe Farbtiefe kein Elektrolytsalz, für eine mittlere Farbtiefe nicht mehr als 5g/l an Elektrolytsalz und für große Farbtiefen nicht mehr als 10 g/l an Elektrolytsalz.

Eine geringe Farbtiefe bezeichnet erfindungsgemäß den Einsatz von 2 Gew-% Farbstoff bezogen auf das zu färbende Substrat, eine mittlere Farbtiefe bezeichnet erfindungsgemäß den Einsatz von 2 bis 4 Gew-% Farbstoff bezogen auf das zu färbende Substrat und eine große Farbtiefe bezeichnet erfindungsgemäß den Einsatz von 4 bis 10-Gew % Farbstoff bezogen auf das zu färbende Substrat.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit leicht auswaschen lassen.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, marineblaue bis tiefschwarze Färbungen mit guten Echtheitseigenschaften.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Lithium-, Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

80 Teile eines elektrolythaltigen Farbstoffpulvers, das den marineblauen Disazofarbstoff der Formel (IA) 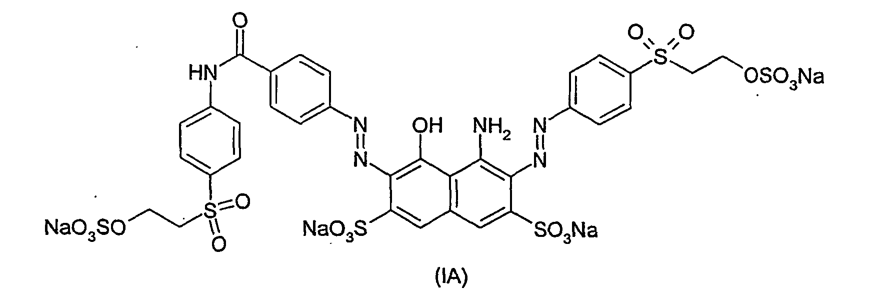 in 70%-igem Anteil enthält und 20 Teile eines elektrolythaltigen Farbstoffpulvers, das den orangefarbenen Monoazofarbstoff der Formel (IIA) in 75%-igem Anteil enthält, werden mechanisch miteinander gemischt.

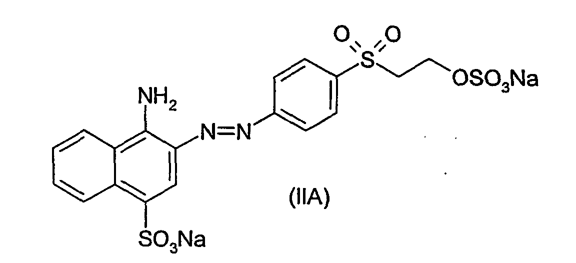

Die resultierende, erfindungsgemäße Farbstoffmischung liefert unter den für Reaktivfarbstoffe üblichen Färbebedingungen, beispielsweise auf Baumwolle, schwarze Färbungen und Drucke.

### Beispiel 2

75 Teile eines elektrolythaltigen Farbstoffpulvers, das den marineblauen Disazofarbstoff der Formel (IA) in 70%-igem Anteil enthält und 25 Teile eines elektrolythaltigen Farbstoffpulvers, das den orangefarbenen Monoazofarbstoff der Formel (IIB) 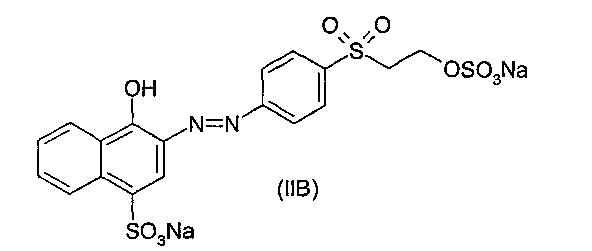 in 75%-igem Anteil enthält, werden in 700 Teilen Wasser gelöst und die erhaltene Farbstofflösung auf pH 5.5-6.5 eingestellt. Durch Eindampfen dieser Farbstofflösung erhält man eine Farbstoffmischung, die auf Baumwolle unter den für Reaktivfarbstoffe üblichen Färbebedingungen schwarze Färbungen und Drucke liefert.

### Beispiel 3

a) 281 Teile 4-(β-Sulfatoethylsulfonyl)-anilin werden in 650 Teilen Eiswasser und 180 Teilen 30%-iger Salzsäure suspendiert und durch Zutropfen von 173 Teilen 40%-iger Natriumnitritlösung diazotiert. Hierzu gibt man 319 Teile 1-Amino-8-naphthol-3,6-disulfonsäure und kuppelt in erster Stufe bei pH 1 bis 1.3 unterhalb 20°C zu einem roten Monoazofarbstoff gemäß allgemeiner Formel (14). Der angegebene pH-Bereich wird dabei durch Zusatz von insgesamt etwa 140 Teilen Natriumhydrogencarbonat eingestellt und während der Kupplungsreaktion gehalten.

b) In einem zweiten, separaten Reaktionsgefäß werden 500 Teile 4-Amino-N-(3-((β-sulfatoethyl)-sulfonyl)-phenyl)-benzamid in 2750 Teilen Eiswasser suspendiert, mit etwa 90 Teilen Natriumcarbonat auf pH 6.5 - 7 eingestellt und mit 217 Teilen 40%-iger Natriumnitritlösung versetzt. Diese Suspension tropft man zu einer Mischung aus 780 Teilen Eis, 630 Teilen Eiswasser und 450 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zur Lösung des roten Monoazofarbstoffs aus a) gepumpt. Daraufhin setzt man diesem Reaktionsgemisch 76 Teile 2-Hydroxynaphthalin-3,6-disulfonsäure hinzu.
Anschließend wird unterhalb 25°C mit Natriumcarbonat pH 5 - 6 eingestellt und die nach beendeter Kupplungsreaktion entstandene 85 : 15 - Mischung der Farbstoffe (IB) und (IIC) durch Sprühtrocknung isoliert.

Alternativ kann die erhaltene Farbstofflösung auch durch Zusatz eines PhosphatPuffers bei pH 5.5 - 6 gepuffert und durch weitere Verdünnung bzw. Konzentration als Flüssigmarke bestimmter Stärke eingestellt werden.
Die erhaltene, erfindungsgemäße Farbstoffmischung färbt Baumwolle in marineblauen bis schwarzen Tönen.

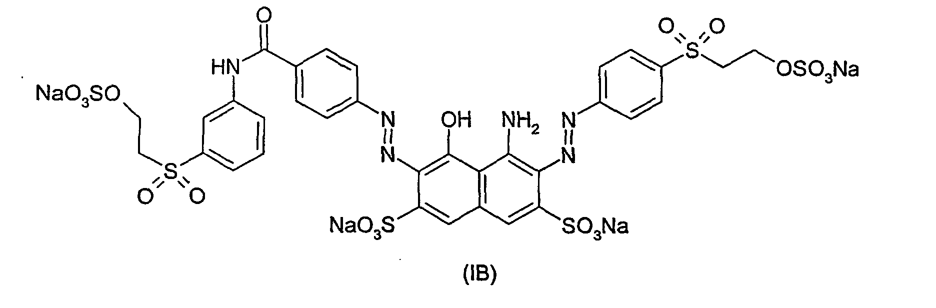

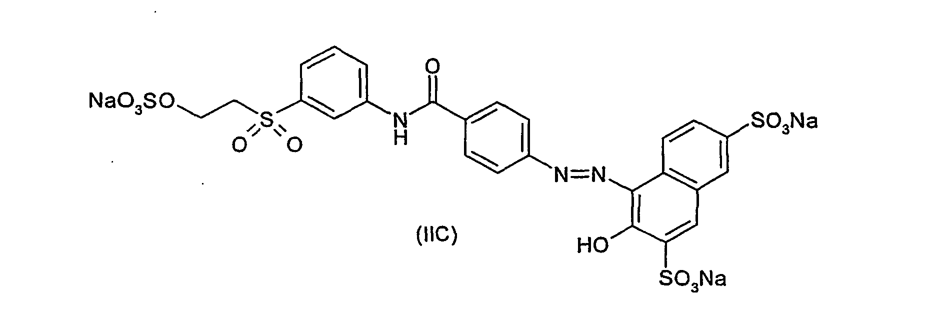

### Beispiele 4 bis 229

Die nachfolgenden Tabellenbeispiele beschreiben weitere erfindungsgemäße Mischungen der Farbstoffe der allgemeinen Formeln (I) und (II), die jeweils in Form der Natriumsalze angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, marineblaue bis tiefschwarze Färbungen.
Farbstoff-Mischungen gemäß Beispiel 1 oder 2

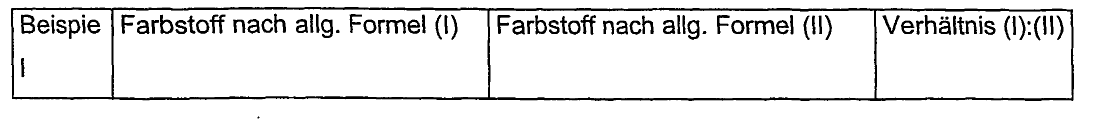

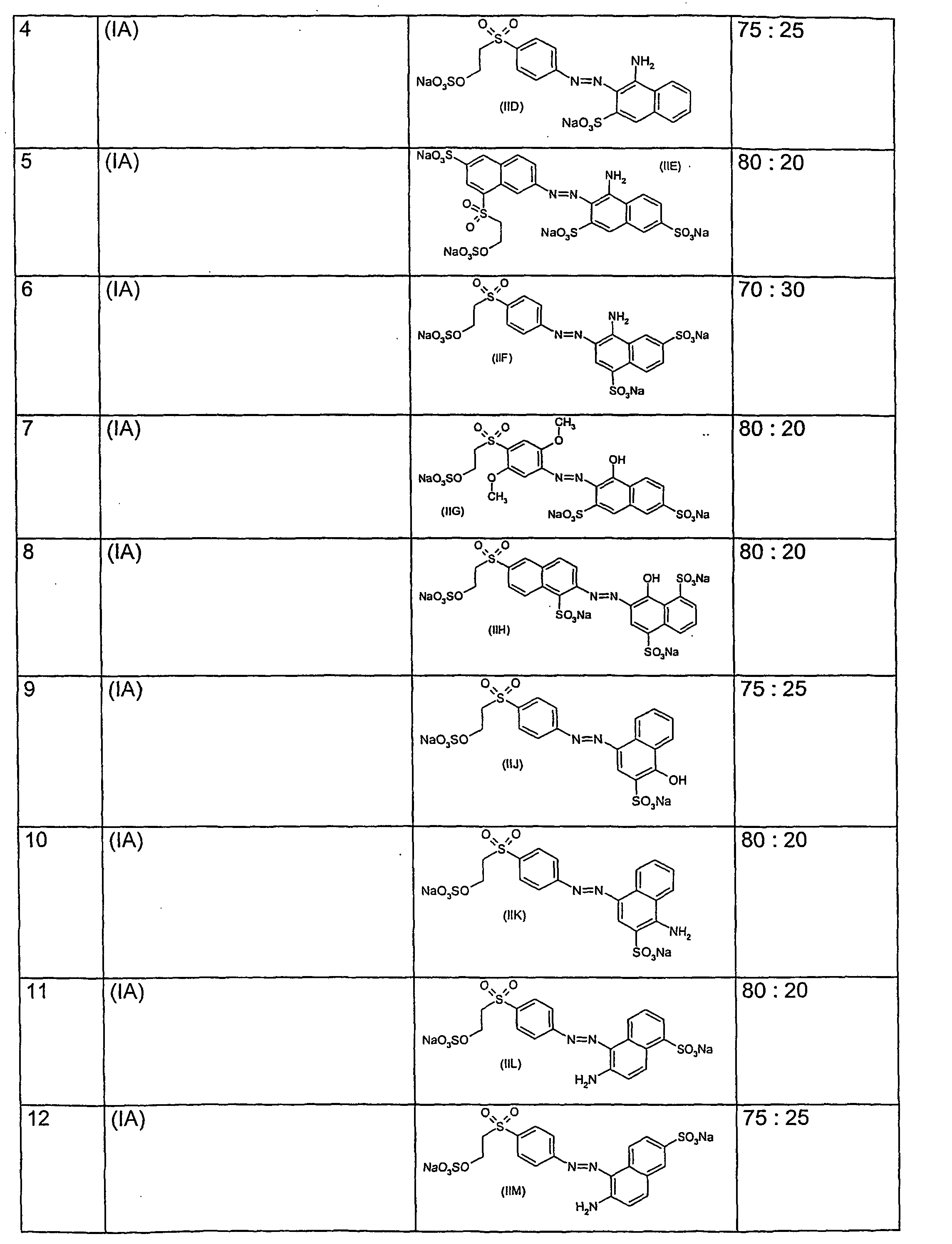

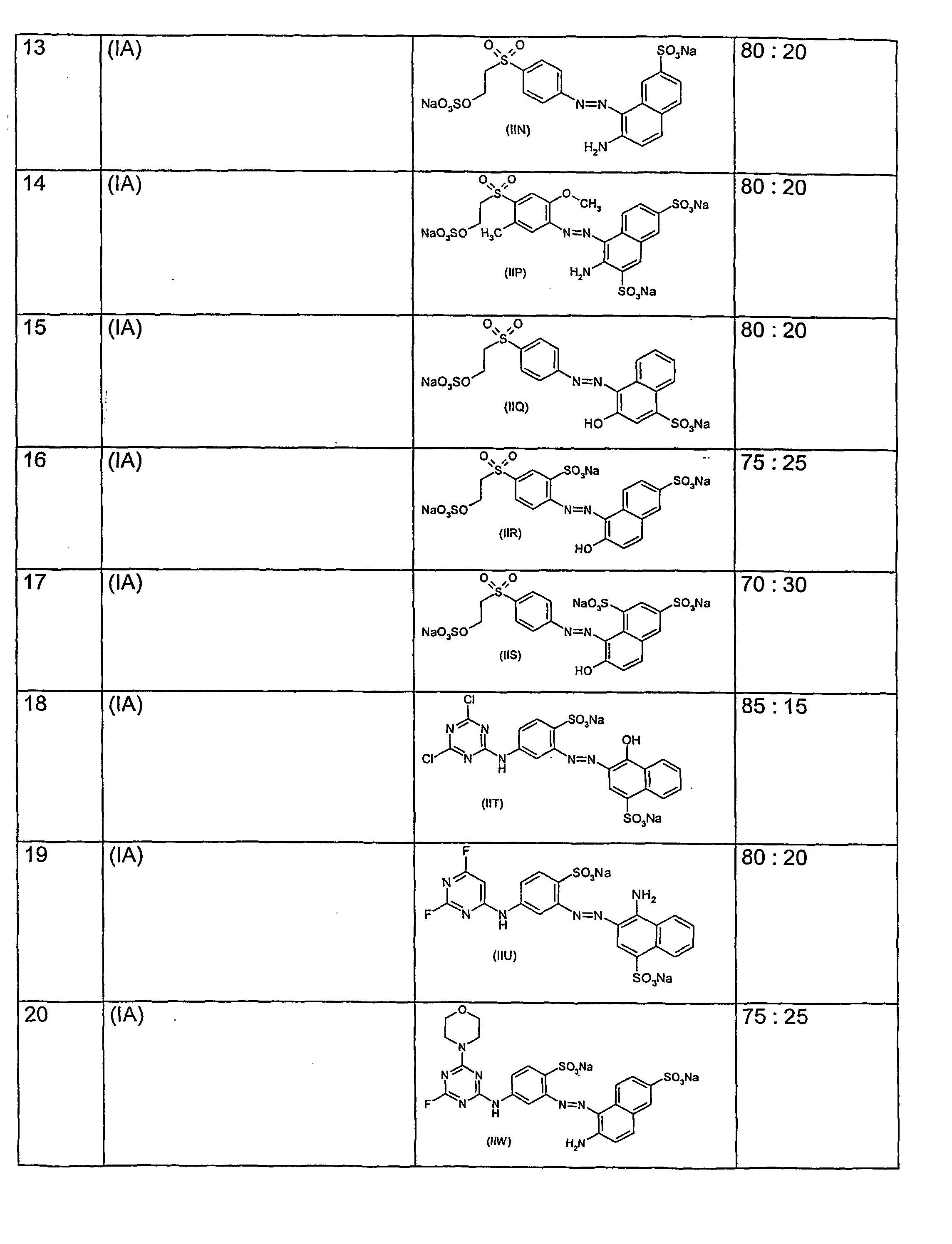

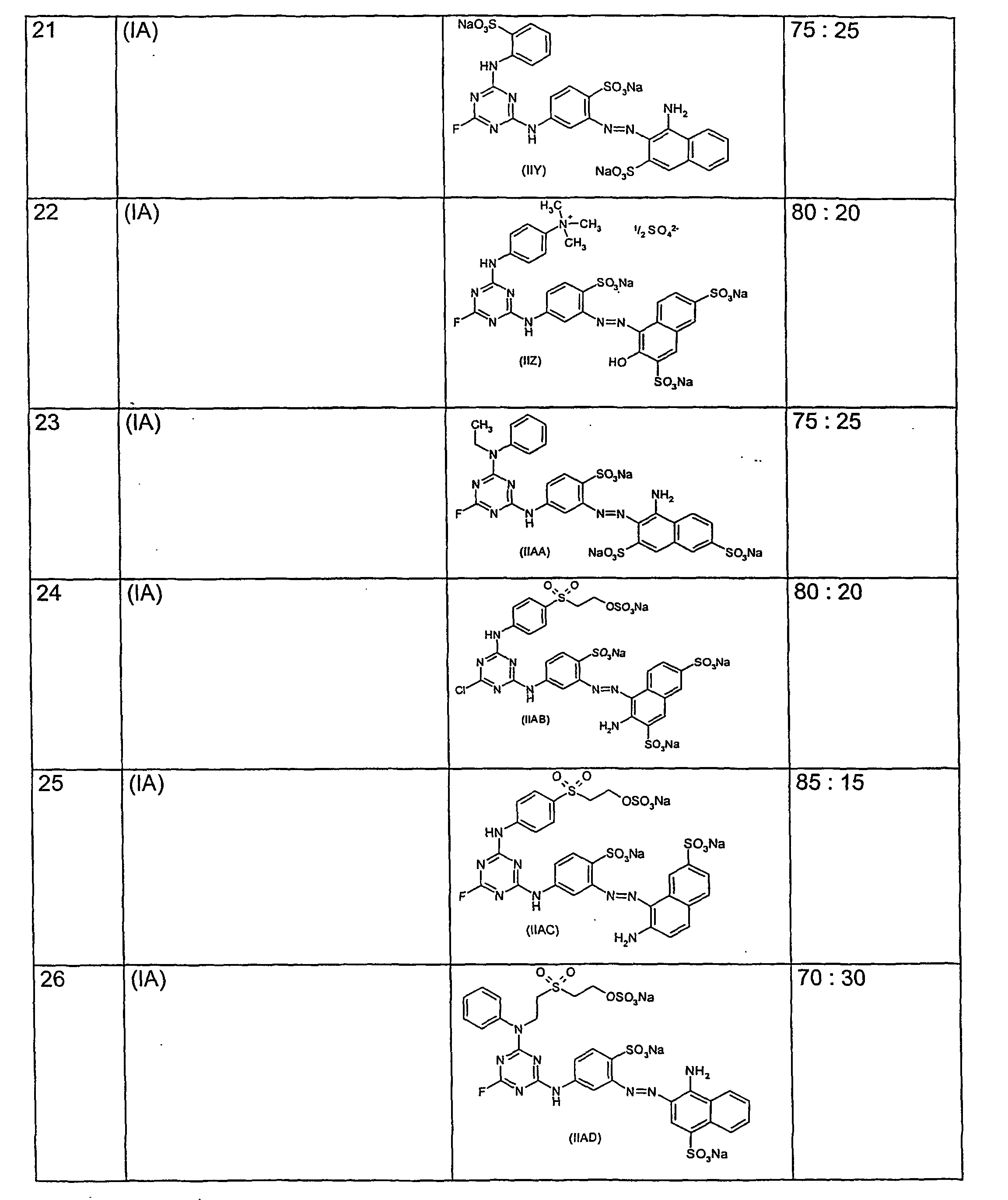

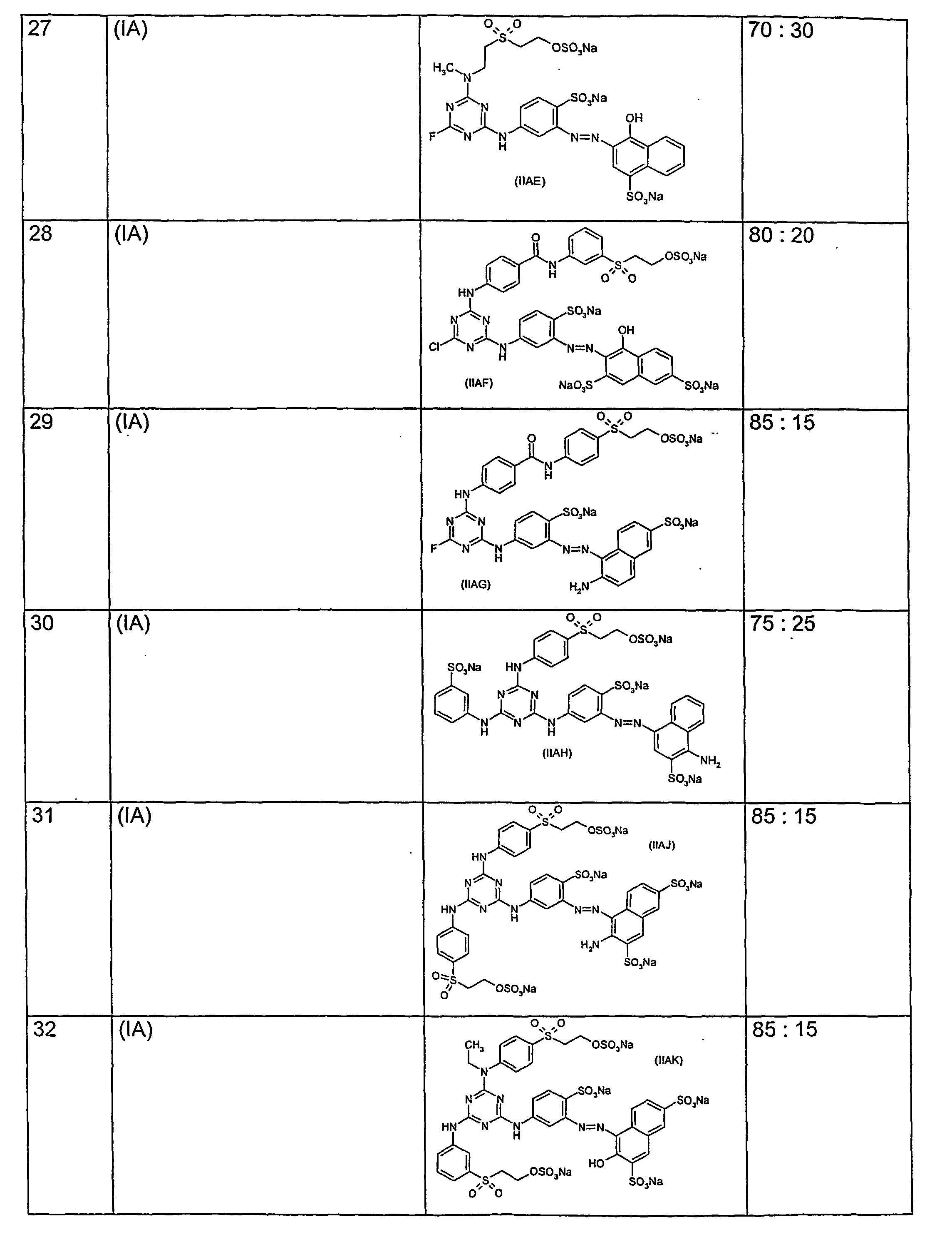

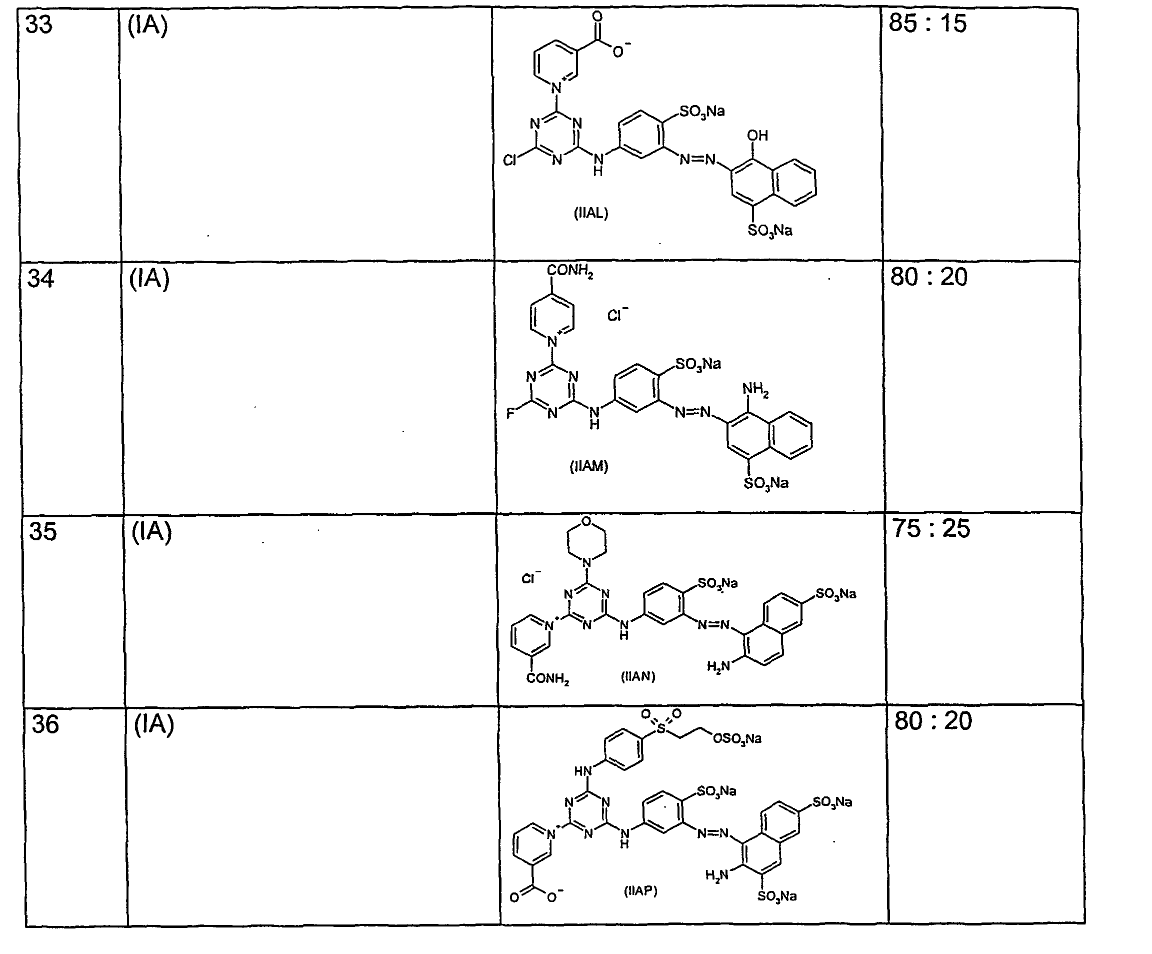

### Beispiele 37 - 71

Wiederholung der Beispiele 1, 2 und 4 - 36 unter Verwendung von Farbstoff (IB) anstelle von Farbstoff (IA).

### Beispiele 72 - 106

Wiederholung der Beispiele 1, 2 und 4 - 36 unter Verwendung von Farbstoff (IC) anstelle von Farbstoff (IA):

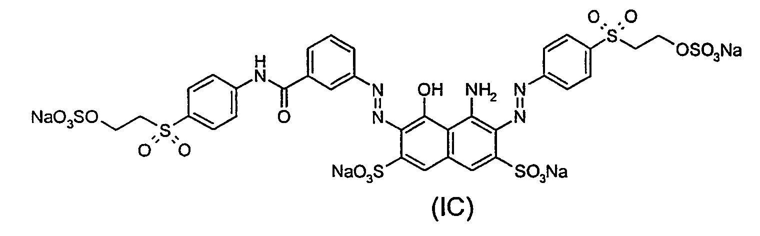

### Beispiele 107 - 141

Wiederholung der Beispiele 1, 2 und 4 - 36 unter Verwendung von Farbstoff (ID) anstelle von Farbstoff (IA):

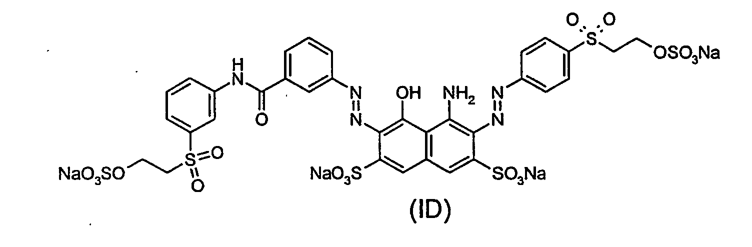

### Beispiele 142 - 176

Wiederholung der Beispiele 1, 2 und 4 - 36 unter Verwendung von Farbstoff (IE) anstelle von Farbstoff (IA):

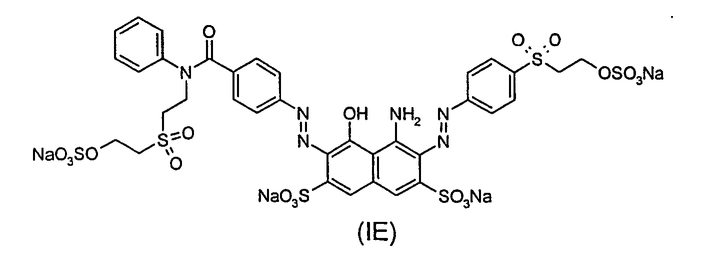

Farbstoff-Mischungen gemäß Beispiel 1,2 oder 3

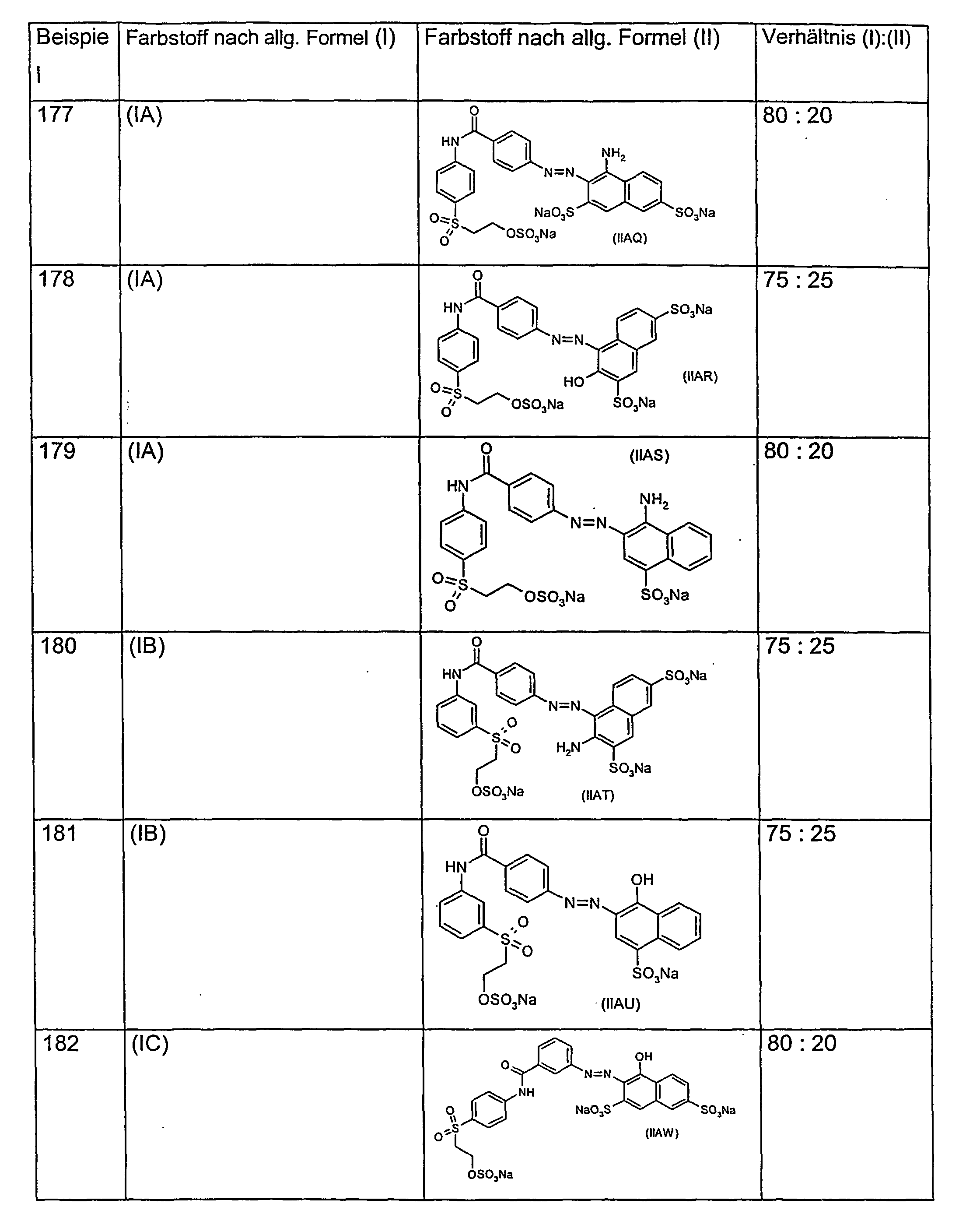

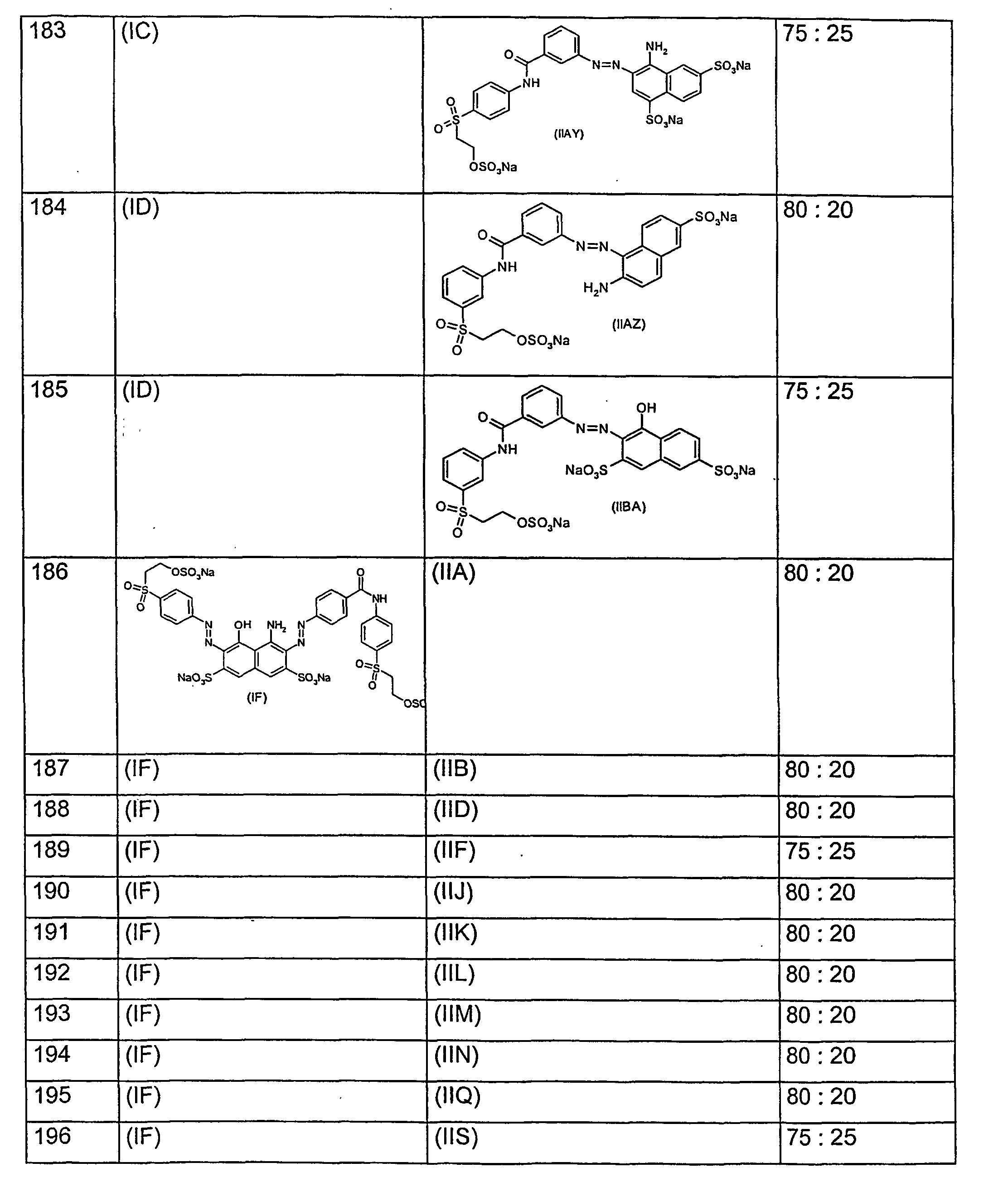

### Beispiele 197 - 207

Wiederholung der Beispiele 186 -196 unter Verwendung von Farbstoff (IG) anstelle von Farbstoff (IF):

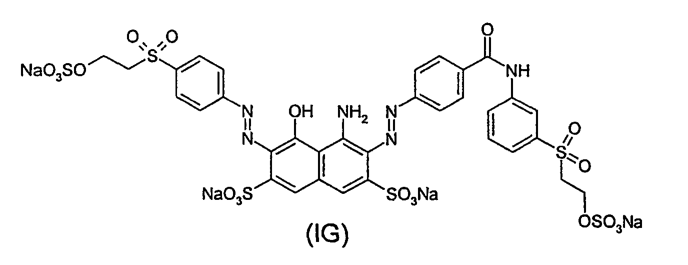

### Beispiele 208 - 218

Wiederholung der Beispiele 186 -196 unter Verwendung von Farbstoff (IH) anstelle von Farbstoff (IF):

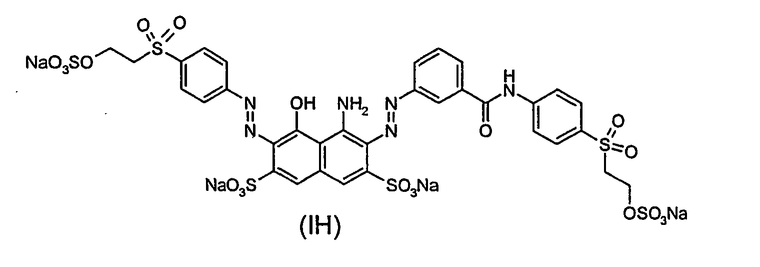

### Beispiele 219 - 229

Wiederholung der Beispiele 186 -196 unter Verwendung von Farbstoff (IJ) anstelle von Farbstoff (IF):

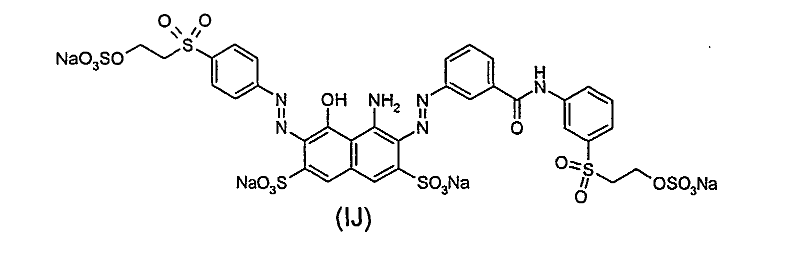

### Anwendungsbeispiel 1

2 Teile eines gemäß Beispiel 1 - 3 erhaltenen Farbstoffs werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-60°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine farbstarke marineblaue bis graue Färbung mit sehr guten Echtheitseigenschaften.

### Anwendungsbeispiel 2

4 Teile eines gemäß Beispiel 1 - 3 erhaltenen Farbstoffs und 5 Teile Natriumchlorid werden in 999 Teilen Wasser gelöst, 7 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke marineblaue bis schwarze Färbung mit sehr guten Echtheitseigenschaften.

### Anwendungsbeispiel 3

8 Teile eines gemäß Beispiel 1 - 3 erhaltenen Farbstoffs und 10 Teile Natriumchlorid werden in 997 Teilen Wasser gelöst, 10 Teile Natriumcarbonat, 1,3 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine tiefschwarze Färbung mit sehr guten Echtheitseigenschaften.

## Patentansprüche

1. Reaktivfarbstoffmischungen, die einen oder mehrere Farbstoffe der nachstehend angegebenen und definierten allgemeinen Formel (I), 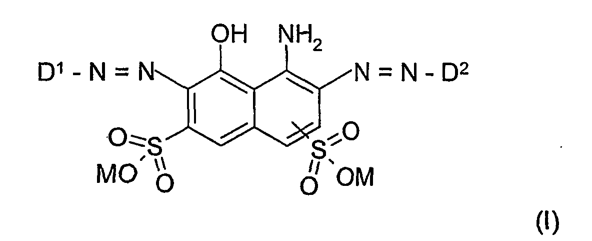 und einen oder mehrere Farbstoffe der nachstehend angegebenen und definierten allgemeinen Formel (II) enthalten 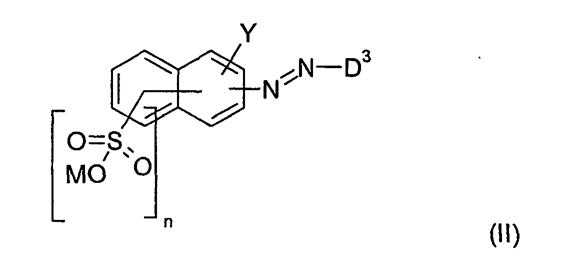 in welchen bedeuten:
D¹ und D² sind eine Gruppe der allgemeinen Formel (1) 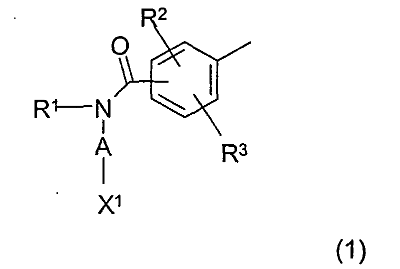 worin
R¹ Wasserstoff, (C₁-C₄)-Alkyl, Aryl oder ein substituierter Arylrest ist;
R² und R³ unabhängig voneinander Wasserstoff, (C₁-C₄)-Alkyl, (C₁-C₄)-Alkoxy, Hydroxy, Sulfo, Carboxy, Amido oder Halogen sind; und
A eine Phenylengruppe der allgemeinen Formel (2) ist 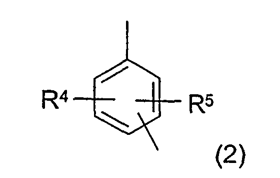 worin
R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Naphthylengruppe der allgemeinen Formel (3) 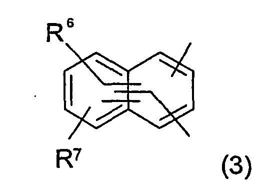 worin
R⁶ und R⁷ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Polymethylengruppe der allgemeinen Formel (4)
-(CR⁸R⁹)ₖ- (4)
worin
k eine ganze Zahl größer 1 ist und
R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und
X¹ für Wasserstoff oder eine Gruppe der Formel -SO₂-Z steht; oder für eine Phenylgruppe der allgemeinen Formel (5) stehen 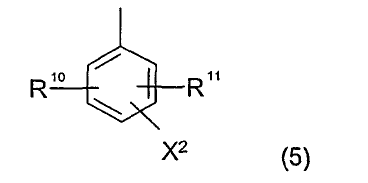 worin
R¹⁰ und R¹¹ unabhängig voneinander Wasserstoff, (C₁-C₄)-Alkyl, (C₁-C₄)-Alkoxy, Hydroxy, Sulfo, Carboxy, Amido oder Halogen sind; und
X² eine der Bedeutungen von X¹ hat;
oder eine Naphthylgruppe der allgemeinen Formel (6) bedeuten 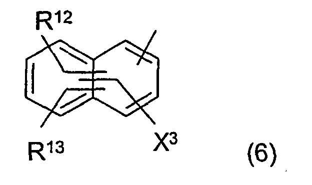 worin
R¹² und R¹³ unabhängig voneinander Wasserstoff, (C₁-C₄)-Alkyl, (C₁-C₄)-Alkoxy, Hydroxy, Sulfo, Carboxy, Amido oder Halogen sind; und
X³ eine der Bedeutungen von X¹ hat;
Z -CH=CH₂, -CH₂CH₂Z¹ oder Hydroxy bedeutet,
worin
Z¹ Hydroxy oder eine unter Alkaliwirkung abspaltbare Gruppe ist; und
M Wasserstoff, ein Alkalimetall oder ein Äquivalent eines Erdalkalimetalls bedeutet;
D³ besitzt eine der Bedeutungen von D¹ oder D² oder steht für eine Gruppe der allgemeinen Formel (7) 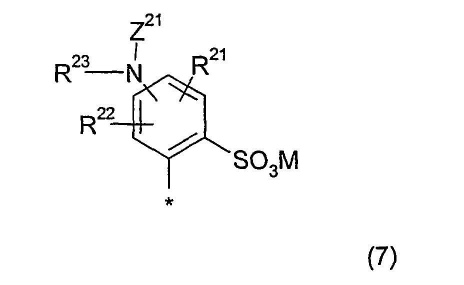 worin
R²¹ und R²² unabhängig voneinander eine der Bedeutungen von R² und R³ haben;
R²³ ist Wasserstoff, (C₁- C₄)-Alkyl, unsubstituiertes oder durch (C₁-C₄)-Alkyl, (C₁-C₄)-Alkoxy, Sulfo, Halogen oder Carboxy substituiertes Phenyl; und
Z²¹ ist ein faserreaktiver heterocyclischer Rest und
n ist 1 oder 2; und
Y steht für Hydroxy oder Amino, das unsubstituiert oder durch (C₁-C₄)-Alkyl oder Aryl substituiert ist;
wobei mindestens einer der Reste D¹ und D² für eine Gruppe der allgemeinen Formel (1) steht;
wobei im Falle, daß A für eine Gruppe der allgemeinen Formel (4) steht, R¹ für Aryl oder substituiertes Aryl steht; und
wobei der Reaktivfarbstoff der allgemeinen Formel (I) mindestens eine -SO₂-Z - Gruppe enthält.

2. Reaktivfarbstoffmischungen gemäß Anspruch 1, **dadurch gekennzeichnet, daß** der reaktive heterocyclische Rest Z²¹ eine Gruppe der allgemeinen Formel (8) oder (9) oder (10) ist, 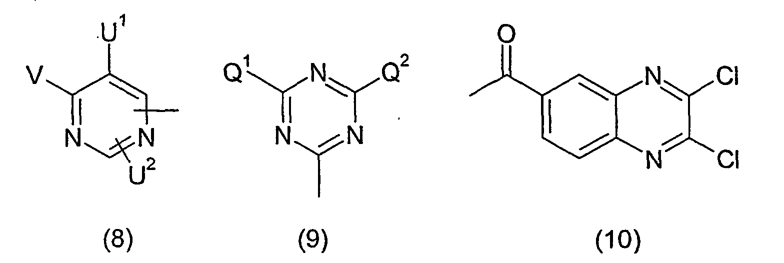 worin
V Fluor oder Chlor bedeutet;
U¹, U² unabhängig voneinander Fluor, Chlor oder Wasserstoff sind; und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (11) oder (12) bedeuten 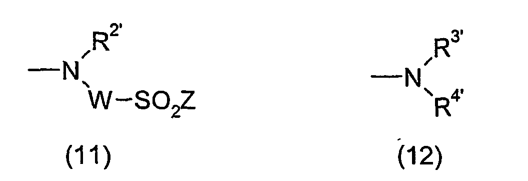 worin
R^{2'} Wasserstoff oder (C₁-C₆)-Alkyl, Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R^{3'} und R^{4'} haben unabhängig voneinander eine der Bedeutungen von R^{2'}, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfo, -NR^{5'}- mit R^{5'} = (C₁-C₆)-Alkyl ist, oder stehen für eine Gruppe der allgemeinen Formel (13) 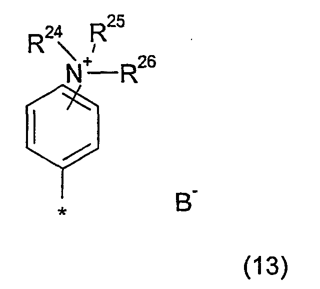 worin
R²⁴, R²⁵ und R²⁶ (C₁-C₄)-Alkyl oder (C₁-C₄)-Hydroxyalkyl sind; und
B- das Äquivalent eines Anions, wie Hydrogensulfat, Sulfat, Fluorid, Chlorid, Bromid, Dihydrogenphosphat, Hydrogenphosphat, Phosphat, Hydroxid oder Acetat ist;
W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfo, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist;
Z die obengenannte Bedeutung hat und
die Substituenten R¹ bis R⁵, R⁸ bis R¹¹ und R²³ Wasserstoff, R⁶, R⁷, R¹², R¹³, R²¹ und R²² Wasserstoff oder Sulfo und R²⁴, R²⁵ und R²⁶ Methyl bedeuten.

3. Reaktivfarbstoffmischungen gemäß Anspruch 1 und/oder 2, **dadurch gekennzeichnet, daß** Z Vinyl, β-Chlorethyl oder β-Sulfatoethyl bedeutet.

4. Reaktivfarbstoffmischungen gemäß mindestens einem der Ansprüche 1 bis 3, **dadurch gekennzeichnet, daß** D³ in der allgemeinen Formel (II) 3-(β-Sulfatoethylsulfonyl)-phenyl, 4-(β-Sulfatoethylsulfonyl)-phenyl, 2-Sulfo-4-(β-sulfatoethylsulfonyl)-phenyl , 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 6-(β-Sulfatoethylsulfonyl)-1-sulfo-naphth-2-yl, 3-Vinylsulfonyl-phenyl, 4-Vinylsulfonyl-phenyl, 4-(3-(2-Sulfatoethylsulfonyl)-phenylcarbamoyl)-phenyl, 4-(4-(2-Sulfatoethylsulfonyl)-phenylcarbamoyl)-phenyl, 3-(3-(2-Sulfatoethylsulfonyl)-phenylcarbamoyl)-phenyl, 3-(4-(2-Sulfatoethylsulfonyl)-phenylcarbamoyl)-phenyl, 1-Sulfo-4-(2,4-difluoropyrimidin-6-yl)-amino-2-phenyl oder 1-Sulfo-4-(4,6-difluoro-pyrimidin-2-yl)-amino-2-phenyl bedeutet.

5. Reaktivfarbstoffmischungen gemäß einem oder mehreren der Ansprüche 1 bis 4, **dadurch gekennzeichnet, daß** mindestens ein Farbstoff der allgemeinen Formel (la) 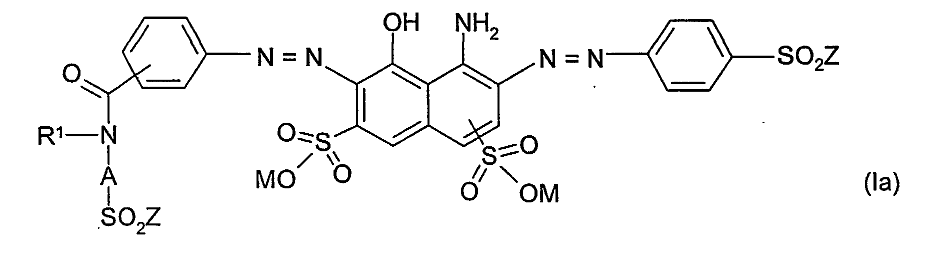 und mindestens ein Farbstoff der allgemeinen Formel (IIa) 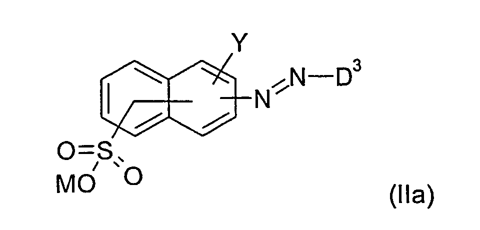 enthalten sind, worin M, A, R¹, Z, D³ und Y wie in Anspruch 1 angegeben, definiert sind.

6. Reaktivfarbstoffmischung gemäß Anspruch 5, **dadurch gekennzeichnet, daß** in Formel (la) A Phenylen, Z Vinyl oder β-Sulfatoethyl bedeutet, und in Formel (IIa) Y für Hydroxy oder Amino steht und D³ wie in Anspruch 1 angegeben, definiert ist.

7. Reaktivfarbstoffmischungen gemäß einem oder mehreren der Ansprüche 1 bis 6, in denen ein oder mehrere Farbstoffe der Formel (I) in einem Anteil von 30 bis 95 Gew.-% und ein oder mehrere Farbstoffe der Formel (II) in einem Anteil von 5 bis 70 Gew.-% enthalten sind.

8. Reaktivfarbstoffmischungen gemäß Anspruch 1, die einen oder mehrere Monoazofarbstoffe der Formel (14) und/oder einen oder mehrere Monoazofarbstoffe der Formel (15) mit jeweils 0.5 bis 6 Gew.-% enthalten, 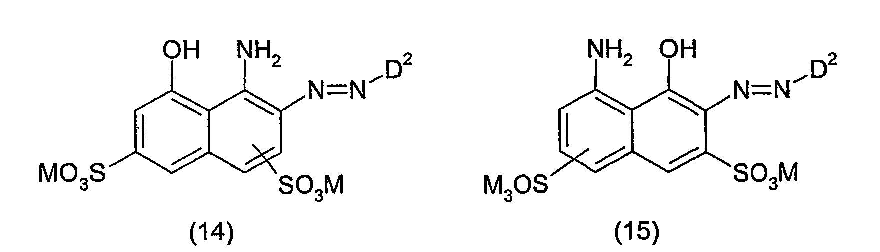 wobei D² und M die in Anspruch 1 angegebenen Bedeutungen besitzen.

9. Verfahren zur Herstellung von Farbstoffmischungen gemäß einem oder mehreren der Ansprüche 1 bis 8, **dadurch gekennzeichnet, daß** die Einzelfarbstoffe der Formeln (I) und (II) und gegebenenfalls (14) und (15) im vorgegebenen Verhältnis entweder in fester Form mechanisch miteinander vermischt werden oder in Form der wässrigen Lösungen gemischt werden.

10. Verfahren zur Herstellung von Farbstoffmischungen gemäß einem oder mehreren der Ansprüche 1 bis 8, für den Fall dass D¹ und D³ gemäß den allgemeinen Formeln (I) und (II) gleiche Bedeutung besitzen , **dadurch gekennzeichnet, daß** man ein Amin der allgemeinen Formel (16)
D¹- NH₂ (16),
worin D¹ wie in Anspruch 1 angegeben definiert ist, in üblicher Weise diazotiert und die erhaltene Diazoniumverbindung anschließend mit einer wässrigen Lösung oder Suspension eines Monoazofarbstoffs gemäß der allgemeinen Formel (14) und einer Verbindung der allgemeinen Formel (17) 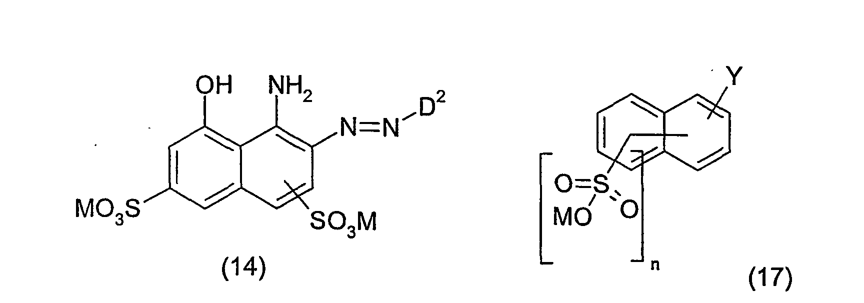 worin M, Y und D² wie in Anspruch 1 definiert sind, umsetzt.

11. Verwendung von Reaktivfarbstoffmischungen gemäß einem oder mehreren der Ansprüche 1 bis 8 zum Färben von hydroxy- und/oder carbonamidgruppen-haltigem Fasermaterial.

## Claims

1. Reactive dye mixtures comprising one or more dyes of the hereinbelow indicated and defined general formula (I) 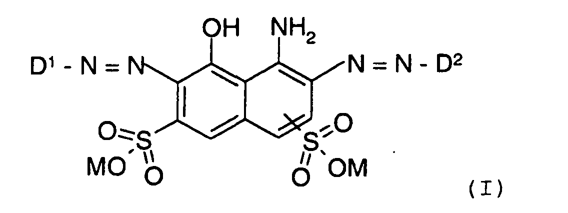 and one or more dyes of the hereinbelow indicated and defined general formula (II) 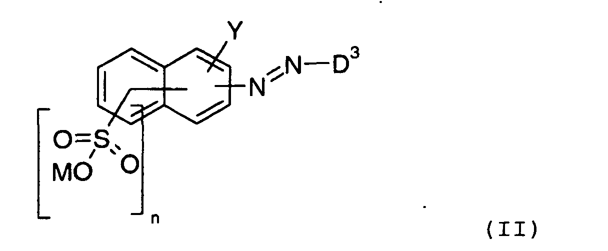 where:
D¹ and D² are each a group of the general formula (1) 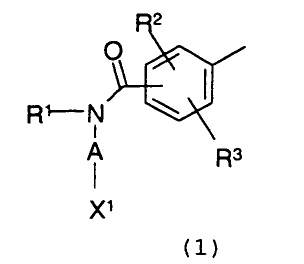 where
R¹ is hydrogen, (C₁-C₄)-alkyl, aryl or a substituted aryl radical;
R² and R³ are independently hydrogen, (C₁-C₄) - alkyl, (C₁-C₄)-alkoxy, hydroxyl, sulfo, carboxyl, amido or halogen; and
A is a phenylene group of the general formula (2) 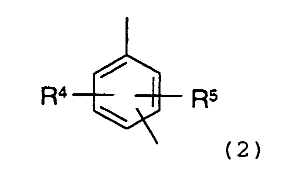 where
R⁴ and R⁵ are independently hydrogen, (C₁-C₄)-alkyl, (C₁-C₄)-alkoxy, hydroxyl, sulfo, carboxyl, amido or halogen; or
a naphthylene group of the general formula (3) 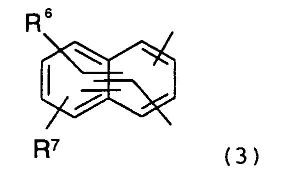 where
R⁶ and R⁷ are independently hydrogen, (C₁-C₄)-alkyl, (C₁-C₄)-alkoxy, hydroxyl, sulfo, carboxyl, amido or halogen; or
a polymethylene group of the general formula (4)
- (CR⁸R⁹)ₖ- (4)
where
k is an integer greater than 1 and
R⁸ and R⁹ are independently hydrogen, (C₁-C₄)-alkyl, (C₁-C₄)-alkoxy, hydroxyl, cyano, amido, halogen or aryl; and
X¹ is hydrogen or a group of the formula -SO₂-Z; or are each a phenyl group of the general formula (5) 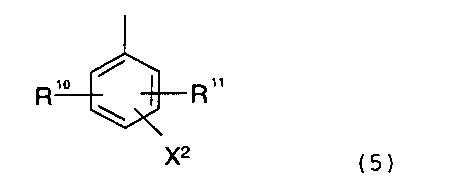 where
R¹⁰ and R¹¹ are independently hydrogen, (C₁-C₄)-alkyl, (C₁-C₄) -alkoxy, hydroxyl, sulfo, carboxyl, amido or halogen; and
X² has one of the meanings of X¹ ;
or are each a naphthyl group of the general formula (6) 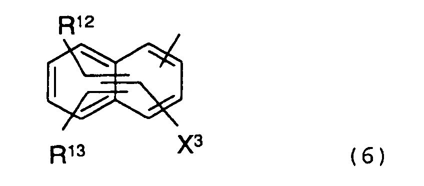 where
R¹² and R¹³ are independently hydrogen, (C₁-C₄)-alkyl, (C₁-C₄) -alkoxy, hydroxyl, sulfo, carboxyl, amido or halogen; and
X³ has one of the meanings of X¹;
Z is -CH=CH₂, -CH₂CH₂Z¹ or hydroxyl,
where
Z¹ is hydroxyl or an alkali-eliminable group; and
M is hydrogen, an alkali metal or one equivalent of an alkaline earth metal;
D³ has one of the meanings of D¹ or D² or is a group of the general formula (7) 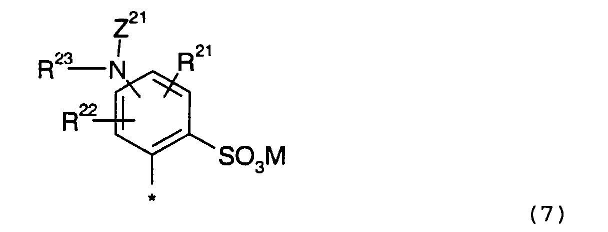 where
R²¹ and R²² independently have one of the meanings of R² and R³;
R²³ is hydrogen, (C₁- C₄) -alkyl, unsubstituted or (C₁-C₄) -alkyl-, (C₁-C₄)-alkoxy-, sulfo-, halogen- or carboxyl-substituted phenyl; and
Z²¹ is a fiber-reactive heterocyclic radical, and
n is 1 or 2; and
Y is hydroxyl or amino which is unsubstituted or substituted by (C₁-C₄)-alkyl or aryl;
at least one of D¹ and D² is a group of the general formula (1);
when A is a group of the general formula (4), R¹ is aryl or substituted aryl; and
the reactive dye of the general formula (I) contains at least one -SO₂-Z group.

2. Reactive dye mixtures as claimed in claim 1, wherein the reactive heterocyclic radical Z²¹ is a group of the general formula (8) or (9) or (10) 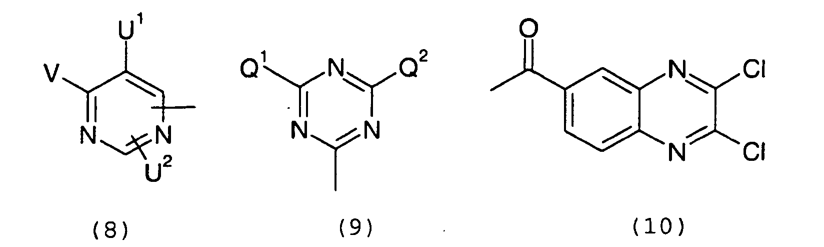 where
V is fluorine or chlorine;
U¹ and U² are independently fluorine, chlorine or hydrogen; and
Q¹ and Q² are independently chlorine, fluorine, cyanamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the general formula (11) or (12) 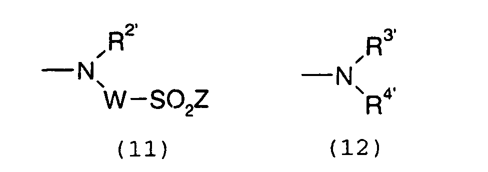
where
R^{2'} is hydrogen or (C₁-C₆)-alkyl, sulfo-(C₁-C₆)-alkyl ,
or phenyl which is unsubstituted or substituted by (C₁-C₄) -alkyl, (C₁-C₄)-alkoxy, sulfo, halogen, carboxyl, acetamido or ureido;
R^{3'} and R^{4'} independently have one of the meanings of R^{2'}, or combine to form a cyclic ring system of the formula - (CH₂)ⱼ- , where j is 4 or 5, or alternatively - (CH₂)₂-E-(CH₂)₂-, where E is oxygen, sulfur, sulfo, -NR^{5'}, where R^{5'} = (C₁-C₆)-alkyl, or are each a group of the general formula (13) 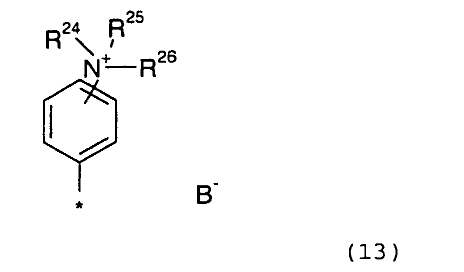 where
R²⁴, R²⁵ and R²⁶ are each (C₁-C₄) -alkyl or (C₁-C₄)-hydroxyalkyl; and
B- is the equivalent of an anion, such as hydrogensulfate, sulfate, fluoride, chloride, bromide, dihydrogenphosphate, hydrogenphosphate, phosphate, hydroxide or acetate;
W is phenylene which is unsubstituted or substituted by 1 or 2 substituents, such as (C₁-C₄)-alkyl, (C₁-C₄) -alkoxy, carboxyl, sulfo, chlorine, bromine, or is (C₁-C₄)-alkylene-arylene or (C₂-C₆)-alkylene, which can be interrupted by oxygen, sulfur, sulfo, amino, carbonyl, carboxamido, or is phenylene-CONH-phenylene, which is unsubstituted or substituted by (C₁-C₄)-alkyl, (C₁-C₄)-alkoxy, hydroxyl, sulfo, carboxyl, amido, ureido or halogen, or is naphthylene, which is unsubstituted or substituted by one or two sulfo groups;
Z is as defined above and
the substituents R¹ to R⁵, R⁸ to R¹¹ and R²³ are each hydrogen, R⁶, R⁷, R¹², R¹³ , R²¹ and R²² are each hydrogen or sulfo and R²⁴, R²⁵ and R²⁶ are each methyl.

3. Reactive dye mixtures as claimed in claim 1 and/or 2, wherein Z is vinyl, β-chloroethyl or β-sulfatoethyl.

4. Reactive dye mixtures as claimed in at least one of claims 1 to 3, wherein D³ in the general formula (II) is 3-(β-sulfatoethylsulfonyl)-phenyl, 4-(β-sulfatoethylsulfonyl)-phenyl, 2-sulfo-4-(β-sulfatoethylsulfonyl)-phenyl, 2-methoxy-5-(β-sulfatoethylsulfonyl)-phenyl, 2,5-dimethoxy-4-(β-sulfatoethylsulfonyl)-phenyl, 2-methoxy-5-methyl-4-(β-sulfatoethylsulfonyl)-phenyl, 6-(β-sulfatoethylsulfonyl)-1-sulfonaphth-2-yl, 3-vinylsulfonylphenyl, 4-vinylsulfonylphenyl, 4-(3-(2-sulfatoethylsulfonyl)-phenylcarbamoyl)-phenyl, 4-(4-(2-sulfatoethylsulfonyl)-phenylcarbamoyl)-phenyl, 3-(3-(2-sulfatoethylsulfonyl)-phenylcarbamoyl)-phenyl, 3-(4-(2-sulfatoethylsulfonyl)-phenylcarbamoyl)-phenyl, 1-sulfo-4-(2,4-difluoro-pyrimidin-6-yl)-amino-2-phenyl or 1-sulfo-4-(4,6-difluoropyrimidin-2-yl)-amino-2-phenyl.

5. Reactive dye mixtures as claimed in one or more of claims 1 to 4, comprising at least one dye of the general Formula (Ia) 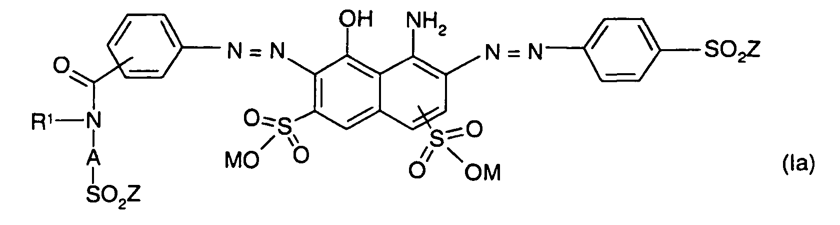 and at least one dye of the general Formula (IIa) 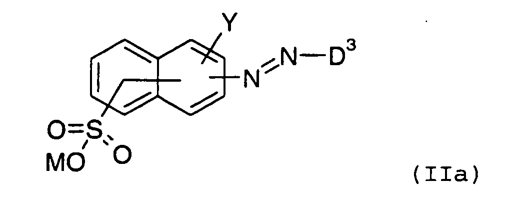 where M, A, R¹, Z, D³ and Y are each as defined in claim 1.

6. A reactive dye mixture as claimed in claim 5, wherein A in the formula (Ia) is phenylene, Z is vinyl or β-sulfatoethyl and Y in the formula (IIa) is hydroxyl or amino and D³ is as defined in claim 1.

7. Reactive dye mixtures as claimed in one or more of claims 1 to 6, comprising one or more dyes of the formula (I) in a fraction of 30 to 95% by weight and one or more dyes of the formula (II) in a fraction of 5 to 70% by weight.

8. Reactive dye mixtures as claimed in claim 1, comprising one or more monoazo dyes of the formula (14) and/or one or more monoazo dyes of the formula (15) each at 0.5 to 6% by weight 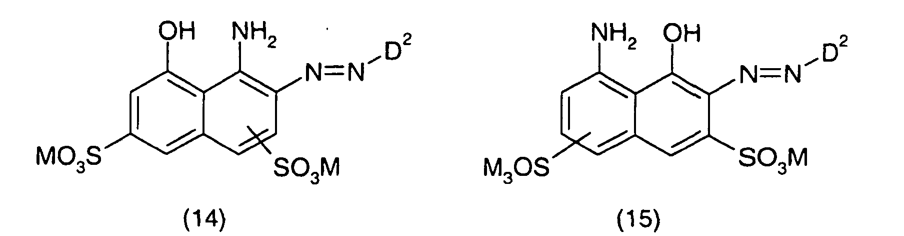 where D² and M are each as defined in claim 1.

9. A process for producing dye mixtures as claimed in one or more of claims 1 to 8, which comprises the individual dyes of the formulae (I) and (II) and, if used, (14) and (15) being mixed with each other in the required proportions either mechanically in solid form or in the form of aqueous solutions.

10. A process for producing dye mixtures as claimed in one or more of claims 1 to 8 for the case where D¹ and D³ in the general formulae (I) and (II) are the same, which comprises diazotizing an amine of the general formula (16)
D¹ - NH₂ (16),
where D¹ is as defined in claim 1, in a conventional manner and then reacting the resulting diazonium compound with an aqueous solution or suspension of a monoazo dye conforming to the general formula (14) and a compound conforming to the general formula (17) 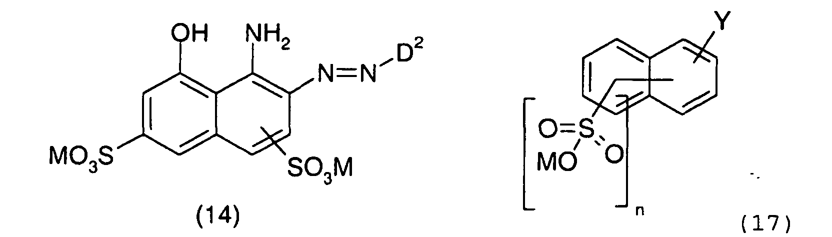 where M, Y and D² are each as defined in claim 1.

11. The use of reactive dye mixtures of one or more of claims 1 to 8 for dyeing hydroxyl- and/or carboxamido-containing fiber material.

## Revendications

1. Mélanges de colorants réactifs, qui contiennent un ou plusieurs colorants de formule générale (I) indiquée et définie ci-après 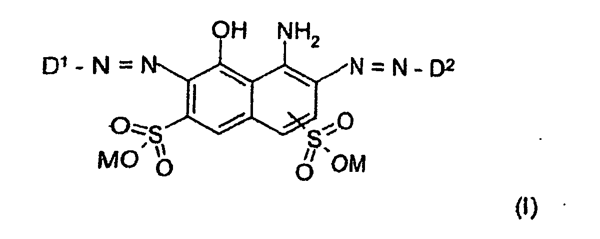 et un ou plusieurs colorants de formule générale (II) indiquée et définie ci-après 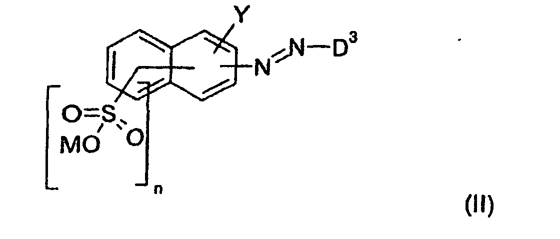 formules dans lesquelles :
D¹ et D² représentent un groupe de formule générale (1) 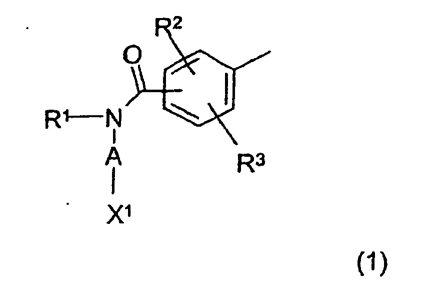 dans laquelle
R¹ est un atome d'hydrogène, un radical alkyle en C₁-C₄, aryle ou un radical aryle substitué ;
R² et R³ représentent, indépendamment l'un de l'autre, un atome d'hydrogène ou d'halogène ou un groupe alkyle en C₁-C₄, alcoxy en C₁-C₄, hydroxy, sulfo, carboxy ou amido ; et
A est un groupe phénylène de formule générale (2) 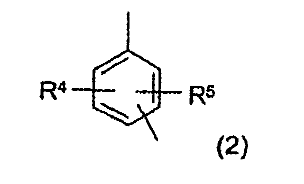 dans laquelle
R⁴ et R⁵ représentent, indépendamment l'un de l'autre, un atome d'hydrogène ou d'halogène ou un groupe alkyle en C₁-C₄, alcoxy en C₁-C₄, hydroxy, sulfo, carboxy ou amido ;
ou
un groupe naphtylène de formule générale (3) 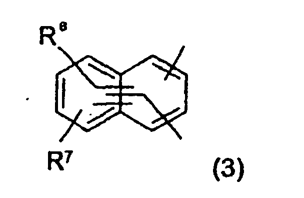 dans laquelle
R⁶ et R⁷ représentent, indépendamment l'un de l'autre, un atome d'hydrogène ou d'halogène ou un groupe alkyle en C₁-C₄, alcoxy en C₁-C₄, hydroxy, sulfo, carboxy ou amido ; ou
un groupe polyméthylène de formule générale (4)
- (CR⁸R⁹)ₖ- (4)
dans laquelle k est un nombre entier supérieur à 1 et
R⁸ et R⁹ représentent, indépendamment l'un de l'autre, un atome d'hydrogène ou d'halogène ou un groupe alkyle en C₁-C₄, alcoxy en C₁-C₄, hydroxy, cyano, amido ou aryle ; et
X¹ représente un atome d'hydrogène ou un groupe de formule -SO₂-Z ; ou
un groupe phényle de formule générale (5) 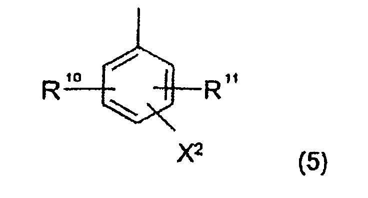 dans laquelle
R¹⁰ et R¹¹ représentent, indépendamment l'un de l'autre, un atome d'hydrogène ou d'halogène ou un groupe alkyle en C₁-C₄, alcoxy en C₁-C₄, hydroxy, sulfo, carboxy ou amido ; et
X² à l'une des significations de X¹ ;
ou représentent un groupe naphtyle de formule générale (6) 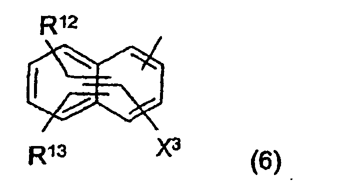 dans laquelle
R¹² et R¹³ représentent, indépendamment l'un de l'autre, un atome d'hydrogène ou d'halogène ou un groupe alkyle en C₁-C₄, alcoxy en C₁-C₄, hydroxy, sulfo, carboxy ou amido ; et
X³ a l'une des significations de X¹ ;
Z représente -CH=CH₂, -CH₂CH₂Z¹ ou le groupe hydroxy,
où
Z¹ est un groupe hydroxy ou un groupe pouvant être éliminé sous l'action d'un alcali ; et
M représente un atome d'hydrogène, un métal alcalin ou un équivalent d'un métal alcalino-terreux ;
D³ a l'une des significations de D¹ ou D² ou représente un groupe de formule générale (7) 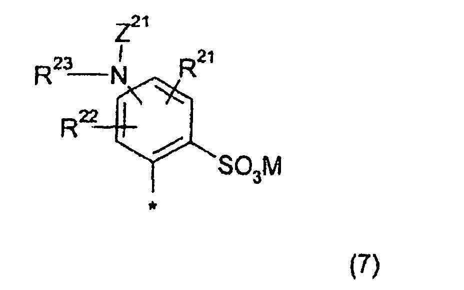 dans laquelle
R²¹ et R²² ont indépendamment l' un de l' autre l'une des significations de R² et R³ ;
R²³ est un atome d'hydrogène, un groupe alkyle en C₁-C₄, un radical phényle non substitué ou substitué par alkyle en C₁-C₄, alcoxy en C₁-C₄, sulfo, halogène ou carboxy ; et
Z²¹ représente un radical hétérocyclique réactif avec les fibres, et
n est 1 ou 2 ; et
Y représente un groupe hydroxy ou amino qui est non substitué ou substitué par alkyle en C₁-C₄ ou aryle ;
au moins l'un des radicaux D¹ et D² représentant un groupe de formule générale (1) ;
dans le cas où A représente un groupe de formule générale (4), R¹ représente un radical aryle ou aryle substitué ; et
le colorant réactif de formule générale (I) contenant au moins un groupe -SO₂-Z.

2. Mélanges de colorants réactifs selon la revendication 1, **caractérisés en ce que** le radical hétérocyclique réactif Z²¹ est un groupe de formule générale (8) ou (9) ou (10), 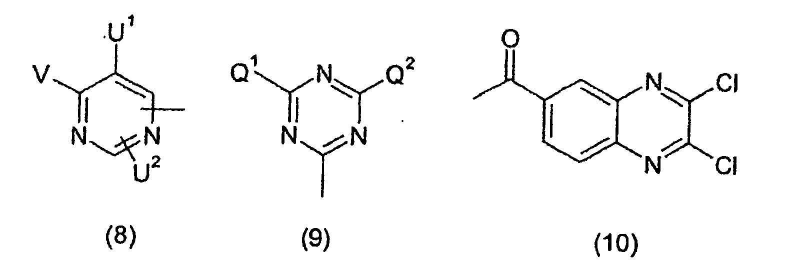 formules dans lesquelles
V représente un atome de fluor ou de chlore ;
U¹, U² représentent, indépendamment l'un de l'autre, un atome de fluor, de chlore ou d'hydrogène ; et
Q¹, Q² représentent, indépendamment l'un de l'autre, un atome de chlore ou de fluor ou un groupe cyanamido, hydroxy, alcoxy en C₁-C₆, phénoxy, sulfophénoxy, mercapto, alkyl(C₁-C₆)mercapto, pyridino, carboxypyridino, carbamoylpyridino ou un groupe de formule générale (11) ou (12) 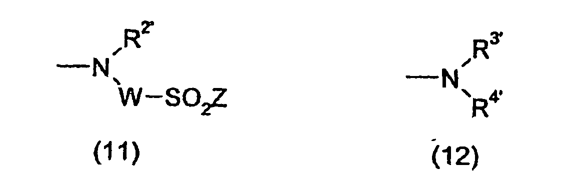 où
R^{2'} est un atome d'hydrogène ou un groupe alkyle en C₁-C₆, sulfoalkyle (C₁-C₆) ou phényle qui est non substitué ou substitué par alkyle en C₁-C₄, alcoxy en C₁-C₄, sulfo, halogène, carboxy, acétamido, uréido ;
R^{3'} et R^{4'} ont indépendamment l' un de l' autre l'une des significations de R^{2'}, ou forment un système cyclique de formule -(CH₂)ⱼ-, dans laquelle j représente 4 ou 5, ou bien de formule -(CH₂)₂-E-(CH₂)₂-, dans laquelle E est un atome d'oxygène ou de soufre ou un groupe sulfo, -NR^{5'}-, où R^{5'} = alkyle en C₁-C₆, ou représentent un groupe de formule générale (13) 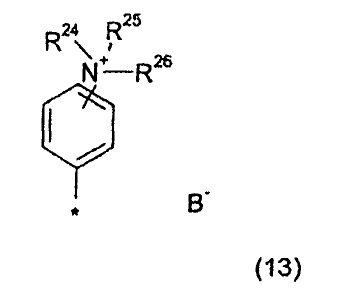 dans laquelle
R²⁴, R²⁵ et R²⁶ représentent un groupe alkyle en C₁-C₄ ou hydroxyalkyle en C₁-C₄ ; et
B⁻ est l'équivalent d'un anion, tel que l'anion hydrogénosulfate, sulfate, fluorure, chlorure, bromure, dihydrogénophosphate, hydrogénophosphate, phosphate, hydroxy ou acétate ;
W est un radical phénylène qui est non substitué ou porte 1 ou 2 substituants, tels qu'alkyle en C₁-C₄, alcoxy en C₁-C₄, carboxy, sulfo, chlore, brome ou est un radical alkylène(C₁-C₄)-arylène ou alkylène en C₂-C₆, qui peut être interrompu par un atome d'oxygène ou de soufre ou par un groupe sulfo, amino, carbonyle, carbamoyle, ou est un groupement phénylène-CONH-phénylène, qui est non substitué ou substitué par alkyle en C₁-C₄, alcoxy en C₁-C₄, hydroxy, sulfo, carboxy, amido, uréido ou halogène, ou est un radical naphtalène qui est non substitué ou substitué par un ou deux groupes sulfo ;
Z a la signification donnée plus haut et les substituants R¹ à R⁵, R⁸ à R¹¹ et R²³ représentent un atome d'hydrogène, R⁶, R⁷, R¹², R¹³, R²¹ et R²² représentent un atome d'hydrogène ou le groupe sulfo, et R²⁴, R²⁵ et R²⁶ représentent le groupe méthyle.

3. Mélanges de colorants réactifs selon la revendication 1 et/ou la revendication 2, **caractérisés en ce que** Z représente le groupe vinyle, β-chloréthyle ou β-sulfatoéthyle.

4. Mélanges de colorants réactifs selon au moins l'une des revendications 1 à 3, **caractérisés en ce que** D³ dans la formule générale (II) représente le groupement 3-(β-sulfatoéthylsulfonyl)phényle, 4-(β-sulfatoéthylsulfonyl)phényle, 2-sulfo-4-(β-sulfatoéthylsulfonyl)phényle, 2-méthoxy-5-(β-sulfatoéthylsulfonyl)phényle, 2,5-diméthoxy-4-(β-sulfatoéthylsulfonyl)phényle, 2-méthoxy-5-méthyl-4-(β-sulfatoéthylsulfonyl)phényle, 6-(β-sulfatoéthylsulfonyl)-2-sulfonapht-2-yle, 3-vinylsulfonylphényle, 4-vinylsulfonylphényle, 4-(3-(2-sulfatoéthylsulfonyl)phénylcarbamoyl)-phényle, 4-(4-(2-sulfatoéthylsulfonyl)phénylcarbamoyl)phényle, 3-(3-(2-sulfatoéthylsulfonyl)-phénylcarbamoyl)phényle, 3-(4-(2-sulfatoéthylsulfonyl)phénylcarbamoyl)phényle, 1-sulfo-4-(2,4-difluoropyrimidin-6-yl)amino-2-phényle ou 1-sulfo-4-(4,6-difluoropyrimidin-2-yl)amino-2-phényle.

5. Mélanges de colorants réactifs selon une ou plusieurs des revendications 1 à 4, **caractérisés en ce qu'**ils contiennent au moins un colorant de formule générale (Ia) 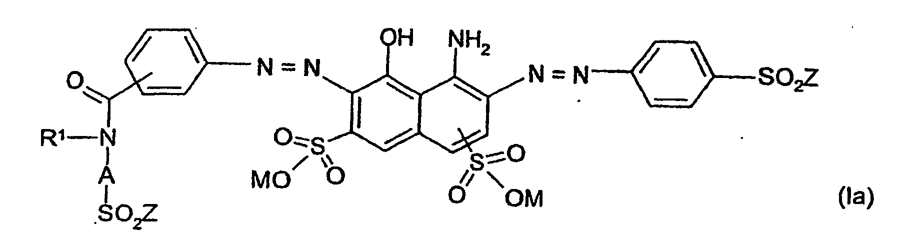 et au moins un colorant de formule générale (IIa) 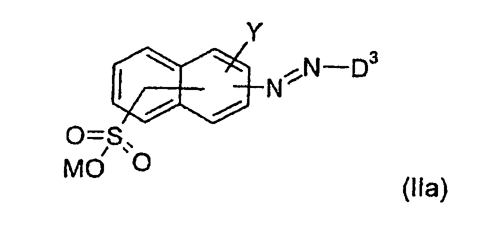 formules dans lesquelles M, A, R¹, Z, D³ et Y sont définis comme indiqué dans la revendication 1.

6. Mélange de colorants réactifs selon la revendication 5, **caractérisé en ce que**, dans la formule (Ia), A représente le groupe phénylène, Z représente le groupe vinyle ou β-sulfatoéthyle, et dans la formule (IIa) Y représente le groupe hydroxy ou amino et D³ est défini comme indiqué dans la revendication 1.

7. Mélanges de colorants réactifs selon une ou plusieurs des revendications 1 à 6, dans lesquels un ou plusieurs colorants de formule (I) sont contenus en une proportion de 30 à 95 % en poids et un ou plusieurs colorants de formule (II) sont contenus en une proportion de 5 à 70 % en poids.

8. Mélanges de colorants réactifs selon la revendication 1, qui contiennent un ou plusieurs colorants monoazoïques de formule (14) et/ou un ou plusieurs colorants monoazoïques de formule (15) à raison de chacun 0,5 à 6 % en poids, 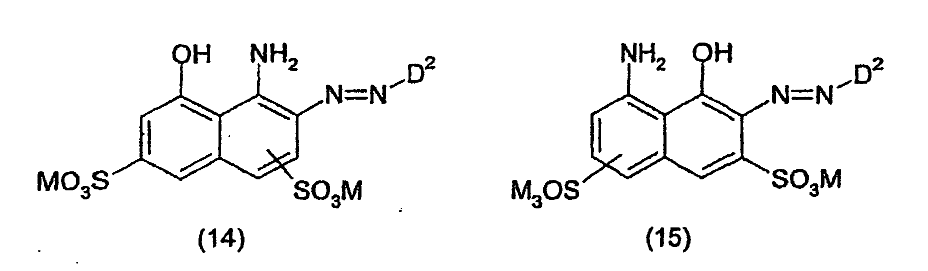 D² et M ayant les significations indiquées dans la revendication 1.

9. Procédé pour la préparation de mélanges de colorants selon une ou plusieurs des revendications 1 à 8, **caractérisé en ce que** les colorants individuels de formules (I) et (II) et éventuellement (14) et (15) soit, sous forme solide, sont mélangés entre eux mécaniquement, soit sont mélangés sous forme des solutions aqueuses, en un rapport préétabli.

10. Procédé pour la préparation de mélanges de colorants selon une ou plusieurs des revendications 1 à 8, dans le cas où D¹ et D³ selon les formules générales (I) et (II) ont la même signification, **carac** **térisé en ce qu'**on soumet à une diazotation, à la manière usuelle, une amine de formule générale (16)
D¹-NH₂ (16)
dans laquelle D¹ est défini comme indiqué dans la revendication 1, et on fait ensuite réagir le composé diazonium obtenu avec une solution ou suspension aqueuse d'un colorant monoazoïque selon la formule générale (14) et un composé de formule générale (17) 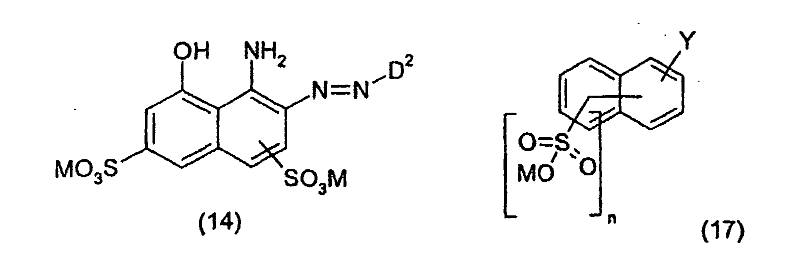 dans laquelle M, Y et D² sont tels que définis dans la revendication 1.

11. Utilisation de mélanges de colorants réactifs selon une ou plusieurs des revendications 1 à 8, pour la teinture de matériau fibreux contenant des groupes hydroxy et/ou carbamoyle.
